(19) Europäisches Patentamt
European Patent Office
Office européen des brevets

(11) **EP 3 742 153 B1**

(12) **FASCICULE DE BREVET EUROPEEN**

(45) Date de publication et mention
de la délivrance du brevet:
**23.11.2022 Bulletin 2022/47**

(21) Numéro de dépôt: **20175775.4**

(22) Date de dépôt: **20.05.2020**

(51) Classification Internationale des Brevets (IPC):
**G01N 21/27** *(2006.01)*     **G01N 21/31** *(2006.01)*
**G01N 21/78** *(2006.01)*     **G01N 31/22** *(2006.01)*

(52) Classification Coopérative des Brevets (CPC):
**G01N 31/22; G01N 21/274; G01N 21/31;
G01N 21/78**

(54) **PROCÉDÉ DE QUANTIFICATION DE LA TENEUR TOTALE EN SAPONINES DANS UN ÉCHANTILLON EN PARTICULIER DANS UN ÉCHANTILLON COMPLEXE**

VERFAHREN ZUR QUANTIFIZIERUNG DES GESAMTGEHALTS AN SAPONINEN IN EINER PROBE, INSBESONDERE IN EINER KOMPLEXEN PROBE

METHOD FOR QUANTIFYING THE TOTAL SAPONIN CONTENT IN A SAMPLE, IN PARTICULAR IN A COMPLEX SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2019 FR 1905347**

(43) Date de publication de la demande:
**25.11.2020 Bulletin 2020/48**

(73) Titulaires:
• **Nor-Feed**
**49070 Beaucouzé (FR)**
• **Universite D'Angers**
**49035 Angers Cedex (FR)**

(72) Inventeurs:
• **Le Bot, Maxime**
**49100 Angers (FR)**
• **Guilet, David**
**49100 Angers (FR)**

(74) Mandataire: **Bringer IP**
**1, Place du Président Thomas Wilson**
**31000 Toulouse (FR)**

(56) Documents cités:
CN-A- 104 838 867     CN-A- 109 765 308
JP-A- S60 219 556

• FUENTES-ALVENTOSA J M ET AL: "Effect of the extraction method on phytochemical composition and antioxidant activity of high dietary fibre powders obtained from asparagus by-products", FOOD CHEMISTRY, ELSEVIER LTD, NL, vol. 116, no. 2, 15 septembre 2009 (2009-09-15), pages 484-490, XP026098332, ISSN: 0308-8146, DOI: 10.1016/J.FOODCHEM.2009.02.074 [extrait le 2009-03-05]
• J. C. BACCOU ET AL: "Spectrophotometric method for the determination of total steroidal sapogenin", ANALYST, vol. 102, no. 1215, juin 1977 (1977-06), pages 458-465, XP055655513, UK ISSN: 0003-2654, DOI: 10.1039/an9770200458
• CHEOK CHOON YOONG ET AL: "Extraction and quantification of saponins: A review", FOOD RESEARCH INTERNATIONAL, ELSEVIER, AMSTERDAM, NL, vol. 59, 31 janvier 2014 (2014-01-31), pages 16-40, XP028838115, ISSN: 0963-9969, DOI: 10.1016/J.FOODRES.2014.01.057
• TIWARI NIMISHA ET AL: "Adjuvant effect ofAsparagus racemosusWilld. derived saponins in antibody production, allergic response and pro-inflammatory cytokine modulation", BIOMEDICINE AND PHARMACOTHERAPY, ELSEVIER, FR, vol. 86, 23 décembre 2016 (2016-12-23), pages 555-561, XP029884765, ISSN: 0753-3322, DOI: 10.1016/J.BIOPHA.2016.11.087

- **FIALLOS-JURADO JENNIFER ET AL: "Saponin determination, expression analysis and functional characterization of saponin biosynthetic genes in Chenopodium quinoa leaves", PLANT SCIENCE, vol. 250, 3 juin 2016 (2016-06-03), pages 188-197, XP029654902, ISSN: 0168-9452, DOI: 10.1016/J.PLANTSCI.2016.05.015**

**Description**

**Domaine technique**

La présente invention concerne le domaine du dosage des saponines. Plus particulièrement elle porte sur un procédé de détermination directe de la teneur totale en saponines triterpéniques et/ou stéroïdiques présentes dans un échantillon, notamment complexe, par spectrophotométrie ; ledit procédé comprenant éventuellement la détermination de la teneur en saponines triterpéniques d'une part et stéroïdiques d'autre part dans ledit échantillon. Le procédé selon l'invention est avantageusement mis en œuvre dans les domaines de l'industrie agro-alimentaire, de la pharmacie et de la cosmétique en particulier dans l'industrie de la nutrition humaine et animale pour la détermination de la teneur totale en saponines dans un échantillon complexe.

**Etat de la technique**

Les saponines sont des hétérosides largement répandus dans le monde végétal et retrouvés dans certains organismes marins. Il s'agit de molécules complexes constituées d'un squelette carboné polycyclique à caractère lipophile appelé sapogénine associée à une ou plusieurs chaines osidiques à caractère hydrophile. Les saponines possèdent diverses propriétés telles que des propriétés édulcorantes et d'amertume (Grenby, 1991) (Kitagawa, 2002) (Heng et al., 2006), des propriétés moussantes et émulsifiantes (Martín et Briones, 1999), des propriétés pharmacologiques et médicinales (Attele, Wu, et Yuan, 1999), des propriétés hémolytiques (Oda et al., 2005) ainsi que des activités insecticides, molluscicides et antimicrobiens (Sparg, Light, et van Staden, 2004). Ces différentes propriétés physicochimiques et biologiques sont employées dans de nombreux secteurs de l'industrie tels que l'alimentation, la cosmétique, l'agriculture et la pharmacie (Güçlü- Üstündag et Mazza, 2007). Il existe deux grandes familles de saponines, les saponines stéroïdiques constituées de 27 atomes de carbone retrouvées dans un nombre minoritaire de plantes et les saponines triterpéniques constitués de 30 atomes de carbone retrouvées dans la majorité des plantes à saponines. Afin de s'assurer de la qualité des extraits et des matières premières utilisées dans l'industrie il est nécessaire de développer des méthodes analytiques rapides, précises, permettant de quantifier la teneur totale en saponines mais également la teneur en saponines stéroïdiques d'une part et en saponines triterpéniques d'autre part.

De nombreuses méthodes ont été développées pour détecter et mesurer les saponines présentes dans les matières végétales ; les méthodes classiques font appel à la gravimétrie (Tenon et al., 2017) et l'indice de mousse (Ross et Miles, 1941). Cependant la gravimétrie qui consiste à extraire les saponines avec du butanol a tendance à surestimer la quantité présente du fait de l'affinité d'autres composés (polyphénols) avec ce même solvant. De même, l'indice de mousse qui mesure la hauteur de mousse est principalement utilisé comme élément de caractérisation.

Il existe des méthodes quantitatives faisant appel à la chromatographie telles que la chromatographie liquide couplées avec différents détecteurs comme l'ultra-violet (UV), la spectrométrie de masse (SM), ou encore l'évaporateur à diffusion de lumière (DEDL) permettant de mesurer la teneur en saponines. Ces bancs chromatographiques comprenant ces détecteurs sont cependant onéreux et ne sont pas adaptés à l'ensemble des saponines. Par ailleurs ces méthodes chromatographiques couplées nécessitent l'usage de standards de saponines pouvant ne pas être disponibles, faute de commercialisation.

Une autre méthode quantitative faisant appel à la chromatographie est la chromatographie sur couche mince (CCM) couplée à un densitomètre. Ces méthodes nécessitent cependant des étapes automatisées pour assurer la robustesse de la quantification. Il est alors nécessaire de s'équiper de modules très couteux. A cet inconvénient s'ajoute ceux de la chromatographie qui est notamment dépendante des échantillons à analyser. Ainsi, les conditions d'analyse sont à modifier en fonction des types échantillons. En outre, il est nécessaire de s'assurer qu'il n'y ait pas de rétention complète de certaines saponines sur le support de chromatographie utilisé, empêchant le dosage total des saponines.

La quantification des saponines par spectrophotométrie est devenue populaire du fait de sa simplicité, de sa rapidité et de son coût relativement faible au regard des méthodes chromatographiques. Elle consiste à révéler les saponines à l'aide d'un agent chromogène en présence d'acide et de doser le chromophore ainsi formé grâce à un spectromètre UV-visible par étalonnage.

La méthode usuellement employée est celle présentée par Hiai et ses collaborateurs (Hiai et al., 1975). Cette méthode utilise une solution de vanilline sulfurique permettant de quantifier initialement les saponines triterpéniques du Panax ginseng à une longueur d'onde de 544 nm portée par les aglycones. Toutefois, les conditions utilisées dans cette méthode entrainent la formation de composés générant des interférences proches des longueurs d'onde de quantification. Par exemple le sorbose génère un interférent absorbant à 520 nm (Hiai et al., 1975 ; Nakajima, 1976). Ces interférents provenant de l'échantillon végétal ou bien des glycosides présents sur les saponines elles-mêmes, il est alors nécessaire d'effectuer une étape de prétraitement de l'échantillon visant à éliminer les interférents, par exemple en réalisant une étape de purification des saponines avant d'effectuer la quantification. De nombreuses demandes de brevet décrivent l'utilisation de tels prétraitements, notamment d'étape de purification pour quantifier les saponines avec de la vanilline sulfurique. Par exemple, CN106404685A relate une méthode de dosage des saponines triterpéniques retrouvées dans des liqueurs, utilisant l'acide chlorhydrique pour hydrolyser lesdites saponines avant de quantifier les sapogénines triterpéniques. Les portions aglycones des saponines étant nommées sapogénines. De même, CN106596426A relate une méthode de dosage des saponines triterpéniques de Gynostemma pentaphyllum qui utilise comme prétraitement une résine macroporeuse avant de quantifier les saponines à 555 nm. Dans un autre exemple, CN106483084A relate une méthode de dosage des saponines triterpéniques de Panacis quinquefolis utilisant comme prétraitement une extraction en phase solide (SPE) avant de quantifier les saponines à 560 nm. Le document « Effect of the extraction method on phytochemical composition and antioxydant activity of high dietary fibre powders obtained from asparagus by-products » de Fuentes-Alventosa et al. FOOD CHEMISTRY, ELSEVIER LTD, NL, vol.116 n°2 pages 484-490 décrit aussi un procédé de détermination des saponines totales, dans lequel la solution à quantifier est obtenue suite à un prétraitement d'extraction en phase solide (SPE) ; ledit procédé mettant en œuvre une réaction de la solution à quantifier avec du p-anisaldéhyde et un mélange d'acides acétique et sulfurique, suivie d'un chauffage à 95-100 °C pendant 2 minutes et une mesure de l'absorbance à 630 nm. Ces prétraitements présentent de nombreux inconvénients parmi lesquels l'augmentation du temps, du coût d'analyse et de développement. De plus, les SPE et résines macroporeuses nécessitent des conditions d'élution particulières pour éliminer les interférents caractéristiques de l'échantillon. De ce fait, les méthodes avec prétraitement sont difficilement transposables à d'autres échantillons dont la composition diffère réduisant considérablement le champ d'application desdites méthodes. De plus, il est nécessaire de s'assurer qu'il n'y ait pas de rétention complète de certaines saponines sur le support utilisé, empêchant le dosage total des saponines.

Il existe une autre méthode spectrophotométrique usuellement employée et développée initialement par l'équipe de Baccou et ses collaborateurs (Baccou, Lambert, et Sauvaire, 1977). Elle utilise du p-anisaldéhyde sulfurique pour révéler spécifiquement les sapogénines stéroïdiques à 430 nm. Des tests réalisés sur différents standards de sapogénines et saponines stéroïdiques ont montré que le chromophore était spécifique des sapogénines stéroïdiques. Les conditions utilisées dans cette méthode permettent d'éviter la formation d'interférences aux longueurs d'ondes de quantification. Elle possède l'avantage de pouvoir doser directement les sapogénines stéroïdiques dans un échantillon végétal complexe sans réaliser de prétraitement. Cependant, les conditions utilisées ne permettent pas de révéler les saponines triterpéniques, réduisant considérablement le champ d'application de ladite méthode. Le brevet JPS60219556A (1985) décrit l'utilisation du p-anisaldehyde sulfurique pour quantifier les saponines totales de Gynostemma pentaphyllum, cette plante ne contenant que des saponines triterpéniques. Afin de pouvoir révéler les saponines triterpéniques, les auteurs utilisent une proportion en acide sulfurique élevée dans le milieu réactionnel, de l'ordre de 75 % (volume/volume). Les saponines triterpéniques peuvent alors être quantifiées à une longueur d'onde de 530 nm. Comme indiqué par les auteurs du brevet, la méthode s'accompagne d'interférences provenant de l'échantillon à analyser tels que les glycosides. Un prétraitement est donc réalisé par extraction en phase solide (SPE) avec un greffage C-18 avant quantification. Comme énoncé précédemment, les prétraitements SPE ont de nombreux inconvénients. En particulier, ils sont dépendants du type d'échantillon à analyser diminuant le champ de ladite méthode et augmentent considérablement le temps et le coût d'analyse de la méthode. En outre, il est nécessaire de s'assurer qu'il n'y ait pas de rétention complète de certaines saponines sur le support solide, empêchant le dosage total des saponines.

Le brevet CN 109 765 308 A (UNIV ZHEJIANG) 17 mai 2019 (2019-05-17) décrit dans un «exemple comparatif» un procédé de détermination de la teneur totale en saponines d'un échantillon, ledit procédé comprenant au moins les étapes suivantes, dans cet ordre :

(1) réaliser une réaction en ajoutant audit échantillon solubilisé dans au moins un solvant, de la vanilline et de l'acide sulfurique, l'acide sulfurique étant présent en une quantité d'environ 57% en volume par rapport au volume total du mélange réactionnel ;
(2) chauffer le mélange réactionnel à une température égale à 60°C, pour obtenir un chromophore en solution ;
(3) mesurer l'absorbance de la solution du chromophore obtenu à une longueur d'onde égale à 600 nm ;
(4) réaliser une gamme de solutions étalon de saponines, dans les conditions de réaction des étapes (1) et (2), et dont les absorbances après réaction chromogène sont obtenues à la longueur d'onde définie à l'étape (3) ;
(5) quantifier la teneur en saponines de l'échantillon en comparant l'absorbance de la solution du chromophore mesurée à l'étape (3) à la gamme d'absorbances des solutions étalon réalisées à l'étape (4).

Malgré les différentes technologies et inventions développées au cours des dernières décennies, il n'existe pas de méthodes de quantification relativement simples, rapides et peu onéreuses, permettant de quantifier directement avec précision :

- tout type de saponines (triterpéniques et/ou stéroïdiques) présentes dans un échantillon, notamment complexe ;
- les saponines triterpéniques d'une part et les saponines stéroidiques d'autre part présentes en mélange dans un échantillon, notamment complexe.

Aucune méthode ne permet en outre de doser aisément et directement en une seule analyse la teneur totale en saponines d'un mélange des deux types de saponines (triterpéniques et stéroïdiques) contenu dans un échantillon donné, notamment complexe.

Il subsiste donc clairement un besoin notamment pour un procédé simple, rapide et peu coûteux, permettant de quantifier avec précision la teneur totale en saponines contenues dans un échantillon, en particulier complexe, qu'elles soient triterpéniques, stéroïdiques, ou que l'échantillon contienne un mélange des deux types de saponines. En outre il existe également un besoin d'un procédé permettant de s'affranchir de traitements préalables des échantillons visant à éliminer les interférents tels que les extractions en phase solide (SPE) et les extractions liquide-liquide.

## Exposé de l'invention

Les inventeurs ont mis au point un procédé permettant de résoudre tout ou partie des problèmes évoqués ci-dessus.

La présente invention est définie dans la revendication 1, et a notamment pour objet un procédé de détermination de la teneur totale en saponines d'un échantillon, ledit procédé comprenant au moins les étapes suivantes, dans cet ordre :

(1) réaliser une réaction en ajoutant audit échantillon solubilisé dans au moins un solvant, du p-anisaldéhyde et de l'acide sulfurique, l'acide sulfurique étant présent en une quantité allant de 40 % à 50 %, tout préférentiellement égale à 45 %, en volume par rapport au volume total du mélange réactionnel ;

(2) chauffer le mélange réactionnel à une température allant de 45°C à 75°C, de préférence allant de 55°C à 65°C, tout préférentiellement égale à 60°C, pour obtenir un chromophore en solution ;

(3) mesurer l'absorbance de la solution du chromophore obtenu à une longueur d'onde allant de 580 à 610 nm, de préférence de 590 à 605 nm, tout préférentiellement égale à 600 nm ;

(4) réaliser une gamme de solutions étalon de saponines, dans les conditions de réaction des étapes (1) et (2), c'est-à-dire avec le même solvant, les mêmes quantités de p-anisaldéhyde et d'acide sulfurique, à la même température, les mêmes durées de chauffage à partir de solutions d'un standard de saponine à différentes concentrations, et dont les absorbances après réaction chromogène sont obtenues à la longueur d'onde définie à l'étape (3), de préférence les absorbances vont de 0 à 1,5, de préférence de 0 à 1 ;

(5) quantifier la teneur en saponines de l'échantillon en comparant l'absorbance de la solution du chromophore mesurée à l'étape (3) à la gamme d'absorbances des solutions étalon réalisées à l'étape (4).

De manière surprenante, les inventeurs ont mis en évidence que ledit procédé selon l'invention permet la formation d'un chromophore identique et spécifique ayant la même gamme particulière de longueur d'onde d'absorption, pour les saponines triterpéniques et stéroïdiques. La formation de ce chromophore permet ainsi de doser tout type de saponines, avantageusement avec tout type de standard dans des échantillons notamment complexes.

Le procédé selon l'invention présente ainsi notamment les avantages suivants :

- il est simple, rapide et peu onéreux ;

- Il est précis et permet l'obtention de quantités de saponines équivalentes à celles obtenues par Chromatographie Liquide à Haute Pression (CLHP) couplée à un Détecteur Évaporatif à Diffusion de Lumière (DEDL) ;

- il peut être mis en œuvre sur un échantillon complexe, ne nécessitant pas, contrairement aux procédés de l'art antérieur, d'étape de prétraitement préalable de l'échantillon visant à éliminer les interférents telle qu'une extraction en phase solide (SPE) ou une extraction liquide-liquide par exemple. Il permet ainsi de s'affranchir des inconvénients liés à ces techniques d'extraction parmi lesquels : conditions dépendantes du type d'échantillon à analyser, rétention possible de saponines sur le support utilisé (empêchant le dosage total des saponines), augmentation du temps et du coût d'analyse du procédé.

- il permet de déterminer de manière directe la teneur totale de tout type de saponines, avec tout type de standard, présents dans un échantillon, notamment complexe ;

- il permet de déterminer de manière directe la teneur totale en saponines d'un mélange de saponines triterpéniques et stéroïdiques présent dans un échantillon, notamment complexe ;

- il permet de déterminer la teneur en saponines stéroïdiques d'une part et en saponines triterpéniques d'autre part présentes en mélange dans un échantillon, notamment complexe, lorsqu'il comprend en outre des étapes de détermination de la teneur en saponines stéroïdiques.

Ainsi, un avantage du procédé selon la présente invention est qu'il permet de quantifier de façon spécifique les saponines présentes dans un échantillon, en particulier dans un échantillon complexe.

En particulier, un autre avantage du procédé selon la présente invention est qu'il permet de quantifier simultanément la totalité des saponines stéroïdiques et triterpéniques dans des échantillons, en particulier dans des échantillons complexes. Le procédé selon la présente invention permet d'obtenir des niveaux de réponse similaires pour des saponines triterpéniques et stéroïdiques à la même longueur d'onde de quantification, permettant ainsi de quantifier ces deux groupes de saponines en mélange dans tous types d'échantillons et en particulier dans un échantillon complexe. Bien entendu, lorsqu'un seul groupe de saponines (triterpéniques ou stéroïdiques) est présent dans l'échantillon, le procédé selon l'invention permet de quantifier ce groupe de saponines.

Avantageusement, le procédé selon l'invention ne comprend pas d'étape d'extraction en phase solide (SPE), ni d'étape d'extraction liquide-liquide des saponines de l'échantillon. Il permet ainsi de s'affranchir des inconvénients liés à ces techniques d'extraction tel qu'exposé ci-dessus. Ces extractions en phase solide (SPE), bien connues de l'Homme du Métier, sont mises en œuvre au moyen d'un support solide sur lequel une partie des composés de l'échantillon est retenue. Ces extractions liquide-liquide, bien connues de l'Homme du Métier, consistent en une extraction par transfert entre deux phases liquides.

Avantageusement, le procédé de détermination de la teneur totale en saponines d'un échantillon selon l'invention est tel qu'un procédé de détermination de la teneur en saponines stéroïdiques dudit échantillon est mis en œuvre avant, après ou simultanément aux étapes (1) à (5), ledit procédé de détermination de la teneur en saponines stéroïdiques comprenant au moins les étapes suivantes, dans cet ordre :

(i) réaliser une réaction en ajoutant audit échantillon solubilisé dans au moins un solvant, du p-anisaldéhyde et de l'acide sulfurique, l'acide sulfurique étant présent en une quantité allant de 5 % à 25 %, de préférence de 10 % à 15 %, tout préférentiellement égale à 12,5 % en volume par rapport au volume total du mélange réactionnel ;

(ii) chauffer le mélange réactionnel à une température allant de 45°C à 80°C, de manière préférée égale à 60°C, pour obtenir un chromophore en solution ;

(iii) mesurer l'absorbance de la solution du chromophore obtenu à une longueur d'onde allant de 400 à 450 nm, de manière préférée 425 nm ;

(iv) réaliser une gamme de solutions étalon de saponines stéroïdiques, dans les conditions de réaction des étapes (i) et (ii), et dont les absorbances après réaction chromogène sont obtenues à la longueur d'onde définie à l'étape (iii), de préférence les absorbances vont de 0 à 1,5 de préférence de 0 à 1 ;

(v) quantifier la teneur en saponines stéroïdiques de l'échantillon en comparant l'absorbance de la solution du chromophore mesurée à l'étape (iii) à la gamme d'absorbances des solutions étalon réalisées à l'étape (iv).

La mise en œuvre, sur un échantillon comprenant à la fois des saponines stéroïdiques et triterpéniques, du procédé de détermination de la teneur totale en saponines selon l'invention couplé avec le procédé de détermination de la teneur en saponines stéroïdiques permet de quantifier dans ledit échantillon la teneur totale en saponines d'une part, la teneur en saponines stéroïdiques d'autre part, puis par différence, la teneur en saponines triterpéniques.

Dans le procédé de détermination de la teneur totale en saponines d'un échantillon, les saponines sont choisies dans le groupe consistant en les saponines triterpéniques, les saponines stéroïdiques et leurs mélanges.

Ainsi lorsque l'échantillon contient des saponines stéroïdiques et des saponines triterpéniques, le procédé de détermination de la teneur totale en saponines d'un échantillon selon l'invention se caractérise en ce que la teneur en saponines triterpéniques est déterminée par différence entre la teneur totale en saponines déterminée selon l'invention et la teneur en saponines stéroïdiques déterminée selon l'invention.

Avantageusement, en particulier lorsqu'au moins une partie de l'échantillon est solide, tout particulièrement lorsque l'échantillon est solide, le procédé de détermination de la teneur totale en saponines selon l'invention comprend une étape préliminaire comprenant au moins une extraction des saponines de l'échantillon effectuée avant l'étape (1) et, si présente, avant l'étape (i) ; ladite au moins une extraction des saponines de l'échantillon étant choisie de préférence dans le groupe consistant en les extractions sous pression, les extractions par macération, les extractions par micro-ondes, les extractions par ultrasons, les extractions par reflux, de manière préférée ladite étape préliminaire est une extraction des saponines de l'échantillon par ultrasons.

Le solvant est de préférence choisi dans le groupe consistant en les solvants aqueux, ioniques, organiques et leurs mélanges, de préférence dans le groupe consistant en l'eau, le méthanol, l'éthanol, l'acétonitrile, l'acétate d'éthyle et leurs mélanges, de manière préférée le méthanol.

**Procédé de détermination de la teneur totale en saponines**

Réaction chromogène

Le procédé de détermination de la teneur totale en saponines selon la présente invention met en œuvre une réaction chromogène lors de laquelle les saponines contenues dans l'échantillon à quantifier réagissent avec un agent dit « agent chromogène » pour former un chromophore.

Le procédé de détermination de la teneur totale en saponines dudit échantillon est mis en œuvre, en particulier selon les étapes (1) à (5).

L'agent chromogène utilisé à l'étape (1) est le p-anisaldéhyde, qui réagit en présence d'acide sulfurique.

La réaction chromogène comprend donc la réaction d'un échantillon solubilisé dans au moins un solvant avec du p-anisaldéhyde et de l'acide sulfurique puis le chauffage dudit mélange réactionnel, le chromophore étant révélé lors de l'étape de chauffage.

De préférence, l'échantillon utilisé à l'étape (1) est solubilisé dans un solvant choisi dans le groupe consistant en l'eau, les alcools en C1-C4 et leurs mélanges, de préférence le méthanol ou l'éthanol et de manière préférée le méthanol.

Généralement, le p-anisaldéhyde utilisé est solubilisé dans un solvant en particulier un alcool en $C_1$-$C_4$ de manière préférée le méthanol, et l'acide sulfurique est utilisé sous la forme d'une solution aqueuse.

Au sens de la présente invention le « mélange réactionnel » est défini comme comprenant l'ensemble des réactifs, en particulier l'échantillon solubilisé, le p-anisaldéhyde et l'acide sulfurique dans au moins un solvant.

De préférence, le mélange réactionnel est formé par l'ajout de l'échantillon solubilisé avec le p-anisaldéhyde puis de l'acide sulfurique, de préférence ledit acide sulfurique étant solubilisé dans l'eau.

Le mélange réactionnel de l'étape (1) comprend généralement un solvant choisi parmi l'eau, les alcools en $C_1$-$C_4$ et leurs mélanges, de préférence choisi parmi le méthanol et l'éthanol et de manière préférée le méthanol.

Par « mélange » on entend un mélange de plusieurs alcools, un mélange d'un alcool avec de l'eau ou un mélange de plusieurs alcools avec de l'eau. Ces mélanges peuvent être effectués en toutes proportions.

La quantité de p-anisaldéhyde ajoutée dans le mélange réactionnel de l'étape (1) dépend de la quantité de l'échantillon à quantifier. Il relève des compétences de l'homme du métier de déterminer cette quantité afin que le p-anisaldéhyde ne devienne pas un réactif limitant et qu'il ne précipite pas

Généralement la quantité de p-anisaldéhyde utilisée à l'étape (1) va de 0,1 % à 10 %, de préférence de 2 % à 5 % et de manière préférée 3 % en volume par rapport au volume total du mélange réactionnel.

L'acide sulfurique, de préférence en solution aqueuse, est présent en une quantité allant de 40 % à 50 %, tout préférentiellement égale à 45 %, en volume par rapport au volume total du mélange réactionnel.

Conformément à l'étape (2), le mélange réactionnel est ensuite porté à une température allant de 45 °C à 75 °C, de préférence de 55 °C à 65 °C et de manière préférée égale à 60 °C, pour permettre la formation du chromophore.

Le temps nécessaire à la formation du chromophore dépend de différents paramètres tels que les quantités d'acide sulfurique, de saponines, la température. Il relève des compétences de l'homme du métier de déterminer la durée de la réaction chromogène.

Généralement la durée de la réaction chromogène va de 1 à 60 minutes, de préférence de 10 à 30 minutes, tout préférentiellement 20 minutes.

Généralement, le mélange réactionnel contenant le chromophore est refroidi ou laissé refroidi avant de réaliser la quantification dudit chromophore.

Mesure-Quantification

L'étape de mesure-quantification du procédé de détermination de la teneur totale en saponines selon l'invention est effectuée par spectrophotométrie.

On entend par « spectrophotométrie », toute analyse effectuée au moyen d'un détecteur optique permettant de mesurer l'intensité du signal (densité optique) lié à la présence de saponines. A titre de détecteur, on peut citer le spectrophotomètre evolution 60S commercialisé par la société Thermo Fisher Scientific.

L'analyse-quantification par spectrophotométrie est possible parce que la réaction chimique des saponines avec le p-anisaldéhyde selon la présente invention conduit à un produit coloré, encore appelé « chromophore », et que l'intensité de la coloration est proportionnelle à la concentration du chromophore à quantifier.

En outre la quantité de chromophore formée est proportionnelle à la quantité de saponines présentes dans la solution.

Cette étape de quantification est basée sur la loi de Beer-Lambert selon laquelle l'absorbance A est proportionnelle à la concentration C suivant la formule :

[Math 1]

$$A = \varepsilon \times l \times C$$

Avec :

A :    l'absorbance de la solution, sans unité ;
ε :    le coefficient d'absorption pondérale en L x g-1 x cm-1 ;
l :    la longueur de cuve traversée par la lumière en cm ;
C :    la concentration massique en g.L-1.

La mesure de l'absorbance au moyen d'un spectrophotomètre va permettre de déterminer la concentration massique en chromophore dans la composition en comparaison avec une gamme d'étalonnage c'est-à-dire une gamme de solutions étalon dudit chromophore réalisée dans les mêmes conditions que la réaction chromogène de l'échantillon à quantifier à savoir avec les mêmes quantités de p-anisaldéhyde et d'acide sulfurique.

Ainsi le procédé selon la présente invention comprend une étape de mesure de l'absorbance de la solution du chromophore obtenu *i.e.* de l'échantillon à quantifier, puis une étape de quantification de la teneur en saponines dans l'échantillon à quantifier par comparaison de l'absorbance mesurée pour l'échantillon avec une gamme d'absorbances correspondant à différentes concentrations du même chromophore obtenu avec des solutions étalons de saponines de concentrations différentes.

La mesure-quantification correspond aux étapes (3) à (5) du procédé de détermination de la teneur totale en saponines.

Conformément à l'étape (3) du procédé selon l'invention, l'absorbance de la solution du chromophore obtenu (à partir de l'échantillon à quantifier) est mesurée à une longueur d'onde allant de 580 à 610 nm, de préférence de 585 à 605 nm, de 590 à 605 nm, de 590 à 600 nm et de manière préférée 600 nm.

Conformément à l'étape (4) du procédé selon l'invention, une gamme de solutions étalon de saponines est réalisée avec un standard de saponines. Il est en effet évident pour l'homme du métier que les chromophores des solutions étalons sont obtenus dans les mêmes conditions que l'échantillon, c'est-à-dire avec le même solvant, les mêmes quantités de p-anisaldéhyde et d'acide sulfurique, à la même température, les mêmes durées de chauffage à partir de solutions d'un standard de saponine à différentes concentrations.

On entend par « standard de saponine » une saponine purifiée ou fraction de saponines purifiées provenant du groupe triterpénique et/ou stéroïdique dont la pureté a été déterminée.

A titre d'exemple on peut citer l'escin IB à titre de standard préféré pour quantifier les saponines triterpéniques et la protodioscine à titre de standard préféré pour quantifier les saponines stéroïdiques. Cependant l'escin IB et la protodioscine, comme tout standard de saponine, peuvent être utilisés pour quantifier un échantillon comprenant uniquement des saponines triterpéniques, uniquement des saponines stéroïdiques ou des mélanges de saponines triterpéniques et stéroïdiques.

Les chromophores des solutions étalon présentent des absorbances allant de 0 à 1,5, de préférence de 0 à 1 à la longueur d'onde définie à l'étape (3) c'est-à-dire la longueur d'onde de mesure de l'échantillon à quantifier. Les solutions étalon sont définies de manière à couvrir une gamme d'absorbances selon des intervalles réguliers.

Avantageusement les valeurs d'absorbances des chromophores sont reportées sur une courbe étalon afin d'établir une droite de calibration en standard de saponines.

Généralement, la gamme de solutions étalon correspond à plusieurs solutions, généralement entre 5 et 10 solutions de concentration allant généralement de 25 x 10-3 g/l à 250 x 10-3 g/l (25 μg/ml à 250 μg/ml) dans le volume réactionnel.

Puis, conformément à l'étape (5), la teneur en saponines de l'échantillon est quantifiée en comparant l'absorbance de la solution du chromophore obtenue à partir de l'échantillon à quantifier *i.e.* mesurée à l'étape (3) avec la gamme d'absorbances des solutions étalon réalisées à la même longueur d'onde selon l'étape (4).

Lorsque la teneur en saponines de l'échantillon à quantifier est supérieure ou inférieure à la gamme des teneurs des solutions étalon, alors l'absorbance de la solution obtenue à partir de l'échantillon à quantifier n'est pas comprise dans la gamme allant de 0 à 1,5. Dans ce cas, une étape de dilution ou de concentration de l'échantillon permettra l'obtention d'un échantillon d'absorbance dans la gamme allant de 0 à 1,5.

Il relève des compétences de l'homme du métier d'adapter la concentration de l'échantillon lorsque l'absorbance de la solution obtenue à partir de l'échantillon à quantifier n'est pas comprise dans la gamme allant de 0 à 1,5.

La détermination de la teneur totale en saponines de l'échantillon est calculée à partir de la concentration en chromophore de ladite solution. Si l'échantillon a subi un ou plusieurs traitements préalables tels qu'une ou plusieurs extractions, le rendement d'extraction est à prendre en considération dans le calcul de la teneur totale en saponines.

Le procédé selon l'invention permet de déterminer la teneur totale en saponines dans des échantillons contenant de 0,1 et 100% en poids de saponines par rapport au poids total de l'échantillon.

## **Extraction**

En particulier, lorsqu'au moins une partie de l'échantillon est solide, tout particulièrement lorsque l'échantillon est solide, l'étape de réaction chromogène du procédé selon l'invention peut être précédée d'une ou plusieurs étapes d'extraction des saponines de l'échantillon. Tous les procédés classiques d'extraction des saponines peuvent être mis en œuvre pour réaliser cette étape.

En particulier, il est préférable que l'échantillon à quantifier ne comprenne ni stérols libres, ni triterpènes libres car ces composés peuvent conduire à la formation d'interférents absorbant également à une longueur d'onde proche de 600 nm et proche de 425 nm.

Or les stérols et triterpènes libres sont des composés apolaires qui peuvent être aisément extraits de l'échantillon en mettant en œuvre une étape dite de délipidation. L'étape de délipidation peut être effectuée par tout moyen apte à éliminer les composés apolaires.

Selon une première variante de l'invention, l'étape de réaction chromogène est précédée d'une délipidation comprenant au moins une extraction des composés apolaires au moyen d'un solvant apolaire notamment choisi dans le groupe consistant en le dichlorométhane, l'hexane, l'éther de pétrole, l'éther diéthylique ; ladite extraction étant éventuellement réalisée en présence d'ultrasons. De préférence la délipidation comprend une étape d'extraction au moyen de dichlorométhane en présence ultrasons.

Selon une deuxième variante de l'invention, en particulier lorsqu'au moins une partie de l'échantillon est solide, tout particulièrement lorsque l'échantillon est solide, par exemple lorsqu'il s'agit d'un matériel végétal séché, une extraction alcoolique ou hydroalcoolique est avantageusement effectuée.

Avantageusement, une étape préliminaire comprenant au moins une extraction de l'échantillon est effectuée avant l'étape (1) ladite au moins une extraction des saponines de l'échantillon étant choisie de préférence dans le groupe consistant en les extractions sous pression, les extractions par macération, les extractions par micro-ondes, les extractions par ultrasons, les extractions par reflux, de manière préférée ladite étape préliminaire est une extraction des saponines de l'échantillon par ultrasons. Avantageusement l'extraction est répétée plusieurs fois, de préférence 2, 3, 4 ou 5 fois et de manière préférée 3 fois.

Ladite extraction est effectuée au moyen d'un solvant possédant des affinités avec les saponines, ledit solvant est choisi dans le groupe consistant en les solvants liquides, subcritiques ou supercritiques.

Le solvant est de préférence choisi dans le groupe consistant en les solvants aqueux, ioniques, organiques et leurs mélanges, de préférence dans le groupe consistant en l'eau, le méthanol, l'éthanol, l'acétonitrile, l'acétate d'éthyle et leurs mélanges, de manière préférée le méthanol.

Bien entendu, la mise en œuvre d'une étape d'extraction et le choix du ou des procédés d'extraction dépendront de l'échantillon à quantifier et en particulier de la présence dans ledit échantillon de composés susceptibles de créer des interférences à une longueur d'onde dans la gamme 580 à 610 nm et dans la gamme 400 à 450 nm. Ces choix relèvent des compétences de l'homme du métier.

Plus particulièrement, ledit procédé d'extraction comprend au moins les étapes suivantes :

- placer l'échantillon dans au moins un solvant,

- procéder à au moins une extraction dudit échantillon,

- procéder à la filtration de la solution provenant de l'étape précédente pour séparer le retentât et le filtrat liquide,

- récupérer le filtrat obtenu à l'étape précédente comprenant au moins un solvant et au moins une saponine,

- évaporer la totalité du solvant pour obtenir un extrait séché,

- solubiliser l'extrait séché provenant de l'étape précédente dans un volume connu d'un deuxième solvant,

- Centrifuger ledit extrait re-soubilisé et collecter le surnageant.

Ledit au moins un premier solvant possède des affinités avec les saponines, il est de préférence choisi parmi les solvants aqueux, ioniques, organiques et leurs mélanges, plus préférentiellement dans le groupe consistant en l'eau, le méthanol, l'éthanol, l'acétonitrile, l'acétate d'éthyle et leurs mélanges, de manière préférée le méthanol.

Selon un mode de réalisation particulier du procédé de l'invention, le deuxième solvant, utilisé pour re-solubiliser l'extrait sec, est un solvant choisi parmi l'eau, le méthanol, l'éthanol et leurs mélanges.

On entend par « échantillon » ou « échantillon à quantifier », un échantillon contenant de 0,1 % à 100 % poids de saponines par rapport au poids total dudit échantillon à quantifier.

On entend par « saponine », toutes saponines c'est à dire des saponines triterpéniques ou stéroïdiques.

Par « échantillon complexe », on entend un échantillon n'ayant pas subi de traitement préalable visant à éliminer les interférents tels que les extractions en phase solide (SPE) et les extractions liquide-liquide. En particulier, par « échantillon complexe », on entend un échantillon comprenant essentiellement un échantillon végétal notamment au moins une plante, une partie de plante, un échantillon comprenant essentiellement un organisme marin, ou encore un aliment complet notamment pour animal, en particulier pour bétail ; de préférence il s'agit d'un échantillon végétal.

En particulier l'échantillon peut être choisi dans le groupe formé par une plante entière ou un mélange de plantes entières, une partie ou un mélange de parties d'une ou de plusieurs plante(s) et/ou organisme(s) marin(s), un extrait d'une plante ou d'un organisme marin (entier ou partie d'organisme marin), un mélange d'extraits d'une ou de plusieurs plante(s) (entière(s) ou partie de plante(s)) et/ou d'organisme(s) marin(s) (entier(s) ou partie d'organisme marin(s)), un prémélange d'un ou plusieurs extrait(s) d'une ou plusieurs plante(s) (entière(s) ou partie de plante(s)) et/ou d'un ou plusieurs organisme(s) marin(s) (entier(s) ou partie d'organisme marin(s)), un mélange d'une ou plusieurs partie d'une ou plusieurs plante(s) (entière(s) ou partie de plante(s)) et/ou d'un ou plusieurs organisme(s) marin(s) (entier(s) ou partie d'organisme marin(s)) avec un ou plusieurs extrait(s) d'une ou plusieurs plante(s) (entière(s) ou partie de plante(s)) et/ou un ou plusieurs organisme(s) marin(s) (entier(s) ou partie d'organisme marin(s)). Une partie de plante peut notamment être choisie dans le groupe consistant en les graines, les feuilles, les fruits, les tiges et les racines de ladite plante. En particulier, l'échantillon peut être choisi dans le groupe consistant en : une plante entière, une partie de plante, un extrait de plante, un organisme marin, une partie d'organisme marin, un extrait d'organisme marin et leurs mélanges.

Avantageusement l'échantillon comprend au moins une partie d'au moins une plante à saponines.

Par « plante à saponines », on entend une plante comprenant au moins une saponine, de préférence au *moins* une saponine stéroïdique ou triterpénique. De préférence, ladite plante à saponines est choisie dans le groupe constitué par les *Theaceae,* les *Chenopodiaceae,* les *Fabaceae,* les *Agavaceae* et leurs mélanges et en particulier *Camellia olefeira, Chenopodium quinoa, Trigonella foenum graecum, Yucca schidigera* et leurs mélanges.

Avantageusement l'échantillon comprend au moins une partie d'au moins un organisme marin. De préférence, l'organisme marin est choisi dans le groupe formé par les *Echinodermata,* les *Porifera,* le zooplancton et leurs mélanges, tout préférentiellement les *Echinodermata,* les *Porifera* et leurs mélanges, en particulier les concombres de mer, les étoiles de mer et les éponges de mer et leurs mélanges.

En fonction de la nature de l'échantillon, celui-ci peut subir un traitement préalable avant la mise en œuvre de l'invention. Avantageusement l'échantillon est solubilisé dans un solvant choisi parmi l'eau, les alcools en en $C_1$-$C_4$ et leurs mélanges, de préférence choisi parmi le méthanol et l'éthanol et de manière préférée le méthanol.

## Procédé de détermination de la teneur en saponines stéroïdiaues

Comme déjà mentionné, un procédé de détermination de la teneur en saponines stéroïdiques dudit échantillon peut être mis en œuvre avant, après ou simultanément audit procédé de détermination de la teneur totale en saponines, en particulier avant, après ou simultanément aux étapes (1) à (5).

Avantageusement, ce procédé est mis en œuvre à partir du même échantillon que le procédé de détermination de la teneur totale en saponines.

De préférence, ledit procédé de détermination de la teneur totale en saponines d'un échantillon selon l'invention comprend, avant, après ou simultanément aux étapes (1) à (5), la mise en œuvre du procédé de détermination de la teneur en saponines stéroïdiques dudit échantillon selon l'invention. Dans ce cas, ledit échantillon utilisé aux étapes (1) et (i) est identique.

En outre, les mêmes traitements d'extraction préalables sont mis en œuvre sur l'échantillon avant la mise en œuvre du procédé de détermination de la teneur totale en saponines et du procédé de détermination de la teneur en saponines stéroïdiques. En particulier, avantageusement une étape préliminaire comprenant au moins une extraction des saponines de l'échantillon est effectuée avant l'étape (1) et/ou avant l'étape (i), de préférence avant les étapes (1) et (i).

### Réaction chromogène

Le procédé de détermination de la teneur en saponines stéroïdiques selon la présente invention met également en œuvre une réaction chromogène et une étape de mesure-quantification par spectrophotométrie.

Le procédé de détermination de la teneur en saponines stéroïdiques dudit échantillon est mis en œuvre selon les étapes (i) à (v).

L'agent chromogène utilisé à l'étape (i) est le p-anisaldéhyde, qui réagit en présence d'acide sulfurique.

La réaction chromogène comprend donc la réaction d'un échantillon solubilisé dans au moins un solvant, avec du p-anisaldéhyde et de l'acide sulfurique puis le chauffage dudit mélange réactionnel, le chromophore étant révélé lors de l'étape de chauffage.

De préférence, l'échantillon utilisé à l'étape (i) est solubilisé dans un solvant choisi dans le groupe consistant en l'eau, les alcools en $C_1$-$C_4$ et leurs mélanges, de préférence l'éthanol ou le méthanol, de manière préférée l'éthanol.

Généralement le p-anisaldéhyde utilisé est solubilisé dans un solvant en particulier un alcool en en $C_1$-$C_4$ de manière préférée l'éthanol, et l'acide sulfurique est utilisé sous la forme d'une solution éthanolique.

Au sens de la présente invention le « mélange réactionnel » est défini comme comprenant l'ensemble des réactifs, en particulier l'échantillon solubilisé, le p-anisaldéhyde et l'acide sulfurique dans au moins un solvant.

Le mélange réactionnel de l'étape (i) comprend généralement un solvant choisi parmi l'eau, les alcools en en $C_1$-$C_4$ et leurs mélanges, de préférence choisi parmi le méthanol et l'éthanol et de manière préférée l'éthanol.

La quantité de p-anisaldéhyde ajoutée dans le mélange réactionnel de l'étape (i) dépend de la quantité de l'échantillon à quantifier. Il relève des compétences de l'homme du métier de déterminer cette quantité afin que le p-anisaldéhyde ne devienne pas un réactif limitant et qu'il ne précipite pas.

Généralement la quantité de p-anisaldéhyde utilisée à l'étape (i) va de 0,1 % à 2 %, et de manière préférée 0,5% en volume par rapport au volume total du mélange réactionnel.

L'acide sulfurique, de préférence en solution éthanolique, est ajouté en une quantité allant de 5 % à 25 %, de manière préférée de 10 % à 15 % et préférentiellement de 12,5 % en volume par rapport au volume total du mélange réactionnel.

Conformément à l'étape (ii), le mélange réactionnel est ensuite porté à une température allant de 45°C à 80°C, de préférence égale à 60°C pour permettre la formation du chromophore.

Le temps nécessaire à la formation du chromophore dépend de différents paramètres tels que les quantités d'acide sulfurique, de saponines, la température. Il relève des compétences de l'homme du métier de déterminer la durée de la réaction chromogène. Généralement la durée de la réaction chromogène va de 1 à 60 minutes, de préférence de 10 à 30 minutes, tout préférentiellement 20 minutes.

Généralement, le mélange réactionnel contenant le chromophore est refroidi ou laissé refroidi avant de réaliser la quantification dudit chromophore.

Mesure-Quantification

Le procédé selon la présente invention comprend une étape de mesure de l'absorbance de la solution du chromophore obtenu puis une étape de quantification des saponines dans l'échantillon.

La mesure-quantification correspond aux étapes (iii) à (v) du procédé de détermination de la teneur en saponines stéroïdiques.

Conformément à l'étape (iii) du procédé selon l'invention, l'absorbance de la solution du chromophore obtenu est mesurée à une longueur d'onde allant de 400 à 450 nm, et de manière préférée 425 nm.

Conformément à l'étape (iv) du procédé selon l'invention, une gamme de solutions étalon de saponines stéroïdiques est réalisée avec un standard de saponines. Il est évident pour l'homme du métier que les chromophores des solutions étalons sont obtenus dans les mêmes conditions que l'échantillon, c'est-à-dire avec le même solvant, les mêmes quantités de p-anisaldéhyde et d'acide sulfurique, à la même température, les mêmes durées de chauffage à partir de solutions d'un standard de saponine à différentes concentrations.

Les chromophores des solutions étalons présentent des absorbances allant de 0 à 1,5, de préférence de 0 à 1 à la longueur d'onde définie à l'étape (iii) c'est-à-dire la longueur d'onde de mesure de l'échantillon à quantifier. Les solutions étalon sont définies de manière à couvrir une gamme d'absorbances selon des intervalles réguliers.

Puis, conformément à l'étape (v), la teneur en saponines stéroïdiques de l'échantillon est quantifiée en comparant l'absorbance de la solution du chromophore obtenue à partir de l'échantillon à quantifier i.e. mesurée à l'étape (iii) avec la gamme d'absorbances des solutions étalon réalisées à la même longueur d'onde selon l'étape (iv).

La quantification de la teneur en saponines stéroïdiques est effectuée selon le même protocole que la quantification de la teneur totale en saponines en référence à une gamme de solutions étalon, de préférence au moyen d'un standard de saponine stéroïdique.

De préférence la quantification de la teneur en saponines stéroïdiques est effectuée avec le même standard de saponine que la quantification de la teneur totale en saponines.

En conséquence lorsqu'un procédé de détermination des saponines stéroïdiques est mis en œuvre, le procédé de détermination de la teneur totale en saponines selon l'invention est de préférence effectué avec un standard de saponines stéroïdiques.

Avantageusement, lorsque les saponines de l'échantillon consistent en des saponines stéroïdiques et triterpéniques, ledit procédé de détermination de la teneur totale en saponines d'un échantillon selon l'invention comprend la détermination de la teneur en saponines triterpéniques dudit échantillon par différence (calcul de la différence) entre la teneur totale en saponines dudit échantillon déterminée à l'issue de l'étape (5) et la teneur en saponines stéroïdiques dudit échantillon déterminée à l'issue de l'étape (v).

Les exemples qui suivent illustrent l'invention sans en limiter la portée.

**Exemples**

**Exemple 1** : Détermination de la teneur totale en saponines dans un échantillon de Camellia oleifera

Il est connu que le *Camellia oleifera* comprend essentiellement des saponines triterpéniques. Dans cet exemple, l'escin IB est utilisée à titre de standard de saponines.

Etablissement d'une courbe étalon avec une saponine de référence

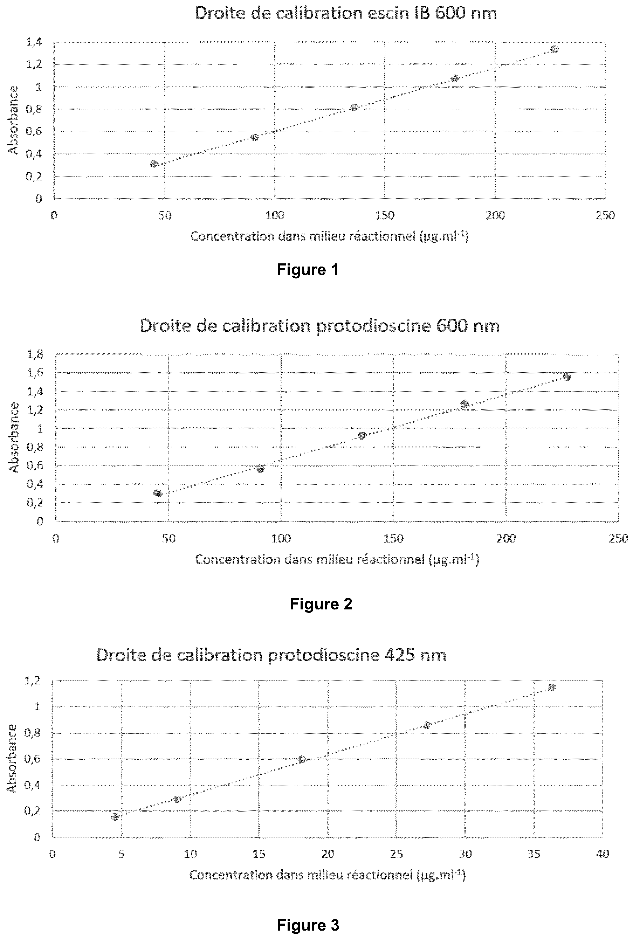

5 solutions étalon sont préparées en introduisant dans 5 tubes à essai un volume de 100 $\mu$l d'une solution étalon d'escin IB dans du méthanol, les concentrations desdites solutions étalon étant respectivement de 1 mg.ml$^{-1}$, 2 mg.ml$^{-1}$, 3 mg.ml$^{-1}$, 4 mg.ml$^{-1}$ et 5 mg.ml$^{-1}$. On ajoute à chacune de ces 5 solutions étalon 100 $\mu$l d'une solution de p-anisaldéhyde solubilisée à 50 % dans du méthanol (volume/volume), puis 2 ml d'une solution d'acide sulfurique aqueuse à 50 % (volume/volume). La concentration en acide sulfurique de la solution est donc de 45% en volume par rapport au volume total du mélange réactionnel. Les 5 tubes à essai sont bouchés et incubés dans un bain-marie à 60°C pendant 20 minutes puis placés dans un bain d'eau glacée pendant 10 minutes. On obtient ainsi 5 solutions dont les concentrations d'escin IB dans le mélange réactionnel sont comprises entre 25 x 10$^{-3}$ g/l et 250 x 10$^{-3}$ g/l (25 $\mu$g.ml$^{-1}$ à 250 $\mu$g.ml$^{-1}$). L'absorbance spécifique de chaque étalon est mesurée à 600 nm contre un blanc réalisé dans les mêmes conditions. On obtient ainsi pour chaque concentration d'escin IB une absorbance que l'on reporte en fonction de la concentration pour obtenir la courbe étalon présentée en [Fig 1].

[Fig 1] correspond à la droite de calibration de l'escin IB: cette droite correspond à l'absorbance en fonction de la concentration (en 10$^{-3}$ g.l$^{-1}$), l'équation de cette droite est : y = 0,0057x + 0,0359 avec R$^2$ = 0,9994.

Détermination de la teneur totale en saponines dans un échantillon de *Camellia Oleifera*

Un échantillon de *Camellia oleifera* est solubilisé dans du dichlorométhane afin d'obtenir une solution à 20 mg.ml$^{-1}$ puis extrait aux ultrasons pendant 5 minutes à une température de 50 °C. La solution est ensuite filtrée sous vide sur un entonnoir contenant un disque fritté en verre de porosité 3.

Le résidu est solubilisé avec 25 ml de méthanol puis extrait aux ultrasons pendant 5 minutes à une température de 50 °C. La solution est filtrée sous vide sur un entonnoir contenant un disque fritté en verre de porosité 3. Cette étape d'extraction est réalisée 3 fois et les filtrats réunis sont mis à sec par un évaporateur rotatif sous pression réduite. Le rendement d'extraction obtenu est de 18 %.

Une quantité d'extrait est solubilisée dans du méthanol pour réaliser une solution à 10 mg.ml$^{-1}$. La solution est centrifugée à 10 000 g pendant 10 minutes. Un volume de 100 $\mu$l du surnageant est ajouté dans un tube à essai avec 100 $\mu$l d'une solution de p-anisaldéhyde solubilisée à 50 % dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage d'escin IB permet de calculer une concentration de 0,31 mg.ml$^{-1}$ soit 31 % (masse/masse) d'escin IB dans l'extrait méthanolique et 5,6 % (masse/masse) équivalent escin IB dans l'échantillon de *Camellia oleifera.*

Eléments de validation de la méthode

Le coefficient de variation en répétabilité (CVr) réalisé sur 6 mesures est de 2% et en fidélité intermédiaire (CVR) réalisé sur 12 mesures est de 3 %. La justesse de la méthode est évaluée par calcul de recouvrement par dopage. Le dopage est réalisé à 150 % sur l'extrait méthanolique de *Camellia oleifera.* Le taux de recouvrement ainsi mesuré est de 100 $\pm$ 2% avec :

[Math 2]

$$Taux\ de\ recouvrement = \frac{teneur\ dopée}{teneur\ non\ dopée + teneur\ ajout} \times 100$$

Où :

Teneur non dopée : quantité de saponines totales mesurée dans l'extrait initial

Teneur ajout : quantité de saponine de référence ajoutée dans l'extrait initial (50% de la valeur initiale)

Teneur dopée : quantité de saponines totales mesurée dans l'extrait dopé (à 150%)

Elément de comparaison

Le procédé selon l'invention a été comparée avec une méthode développée en interne sur Chromatographie Liquide à Haute Pression (CLHP) couplée à un Détecteur Évaporatif à Diffusion de Lumière (DEDL) (CLHP-DEDL) ainsi que par la méthode gravimétrique (Budan et al., 2013). Dans l'échantillon de *Camellia oleifera*, la teneur totale en saponines est de 5,6 % (masse/masse) contre 5,4 % (masse/masse) équivalent escin IB en CLHP-DEDL. La méthode gravimétrique, qui a tendance à surestimer la quantité de saponines permet d'obtenir une valeur de 10,4 % (masse/masse) dans l'échantillon.

Le [Table 1] regroupe les données majeures obtenues pour la mesure de la teneur totale en saponines dans l'échantillon de *Camellia oleifera*.

[Table 1]

| Réalisée par le procédé selon l'invention | | | |
|---|---|---|---|
| Teneur (eq. escin IB) | Taux de recouvrement sur extrait | Teneur (eq. escin IB) par CLHP-DEDL | Teneur par gravimétrie |
| 5,6 % | 100 ± 2 % | 5,4 % | 10,4 % |

**Exemple 2** : **Détermination de la teneur totale en saponines dans un échantillon de *Chenopodium quinoa***

Il est connu que le *Chenopodium quinoa* comprend essentiellement des saponines triterpéniques. Dans cet exemple, l'escin IB est utilisée à titre de standard de saponines.

Etablissement d'une courbe étalon avec une saponine de référence

La courbe étalon est réalisée conformément à celle de l'exemple 1.

Détermination de la teneur totale en saponines dans un échantillon de *Chenopodium quinoa*

Un échantillon de *Chenopodium quinoa* est solubilisé dans du dichlorométhane afin d'obtenir une solution à 20 mg.ml$^{-1}$ puis extrait aux ultrasons pendant 5 minutes à une température de 50 °C. La solution est ensuite filtrée sous vide sur un entonnoir contenant un disque fritté en verre de porosité 3.

Le résidu est solubilisé avec 25 ml de méthanol puis extrait aux ultrasons pendant 5 minutes à une température de 50 °C. La solution est filtrée sous vide sur un entonnoir contenant un disque fritté en verre de porosité 3. Cette étape d'extraction est réalisée 3 fois et les filtrats réunis sont mis à sec par un évaporateur rotatif sous pression réduite. Le rendement d'extraction obtenu est de 45 %.

Une quantité d'extrait est solubilisée dans du méthanol pour réaliser une solution à 10 mg.ml$^{-1}$. La solution est centrifugée à 10 000 g pendant 10 minutes. Un volume de 100 μl du surnageant est ajouté dans un tube à essai avec 100 μl d'une solution de p-anisaldéhyde solubilisée à 50% dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage d'escin IB permet de calculer une concentration de 0,095 mg.ml$^{-1}$ soit 9,5 % (masse/masse) d'escin IB dans l'extrait méthanolique et 4,3 % (masse/masse) équivalent escin IB dans l'échantillon de *Chenopodium quinoa.*

Eléments de validation de la méthode

Le coefficient de variation en répétabilité (CVr) réalisé sur 3 mesures est de 1 %. Un dopage réalisé à 125 % sur l'extrait méthanolique de *Chenopodium quinoa* permet d'obtenir un taux de recouvrement 105 $\pm$ 3% avec :

[Math 2]

$$Taux\ de\ recouvrement = \frac{teneur\ dopée}{teneur\ non\ dopée + teneur\ ajout} \times 100$$

Où:

Teneur non dopée : quantité de saponines totales mesurée dans l'extrait initial
Teneur ajout : quantité de saponine de référence ajoutée dans l'extrait initial (25% de la valeur initiale)
Teneur dopée : quantité de saponines totales mesurée dans l'extrait dopé (à 125%)

Elément de comparaison

Le procédé selon l'invention a été comparé avec une méthode développée en interne sur CLHP-DEDL. Dans l'échantillon de *Chenopodium quinoa,* la teneur totale en saponines est de 4,3 % (masse/masse), il est également de 4,3 % (masse/masse) équivalent escin IB en CLHP-DEDL.

Le [Table 2] regroupe les données majeures obtenues pour la mesure de la teneur totale en saponines dans l'échantillon de *Chenopodium quinoa.*

[Table 2]

| Réalisée par le procédé selon l'invention | | |
|---|---|---|
| Teneur (eq. escin IB) | Taux de recouvrement sur extrait | Teneur (eq. escin IB) par CLHP-DEDL |
| 4,3 % | 105 $\pm$ 3 % | 4,3 % |

**Exemple 3 : Détermination de la teneur totale en saponines dans un échantillon de *Trigonella foenum graecum***

Il est connu que le *Trigonella foenum graecum* comprend essentiellement des saponines stéroïdiques. Dans cet exemple, la protodioscine est utilisée à titre de standard de saponines.

Etablissement d'une courbe étalon avec une saponine de référence

5 solutions étalon sont préparées en introduisant dans 5 tubes à essai un volume de 100 $\mu$l d'une solution étalon de protodioscine dans du méthanol, les concentrations desdites solutions étalon étant respectivement les concentrations desdites solutions étalon étant respectivement de 1 mg.ml$^{-1}$, 2 mg.ml$^{-1}$, 3 mg.ml$^{-1}$, 4 mg.ml$^{-1}$ et 5 mg.ml$^{-1}$. On ajoute à chacune de ces 5 solutions étalon 100 $\mu$l d'une solution de p-anisaldéhyde solubilisée à 50 % dans du méthanol (volume/volume), puis 2 ml d'une solution d'acide sulfurique aqueuse à 50 % (volume/volume). La concentration en acide sulfurique de la solution est donc de 45% en volume par rapport au volume total du mélange réactionnel. Les 5 tubes à essai sont bouchés et incubés dans un bain-marie à 60 °C pendant 20 minutes puis placés dans un bain d'eau glacé pendant 10 minutes. On obtient ainsi 5 solutions dont les concentrations d'escin IB dans le mélange réactionnel sont comprises entre 25 x 10$^{-3}$ g/l et 250 x 10$^{-3}$ g/l (25 $\mu$g.ml$^{-1}$ à 250 $\mu$g.ml$^{-1}$). L'absorbance spécifique de chaque étalon est mesurée à 600 nm contre un blanc réalisé dans les mêmes conditions. On obtient ainsi pour chaque concentration de protodioscine une absorbance que l'on reporte en fonction de la concentration pour obtenir la courbe étalon présentée en [Fig 2].

[Fig 2] correspond à la droite de calibration de la protodioscine : cette droite correspond à l'absorbance en fonction de la concentration (en 10-3 g.l$^{-1}$), cette droite a pour équation y = 0,0071x - 0,0509 avec $R^2$ = 0,9986.

Détermination de la teneur totale en saponines dans un échantillon de *Trigonella foenum graecum*

Un échantillon de *Trigonella foenum graecum* est solubilisé dans du dichlorométhane afin d'obtenir une solution à 20 mg.ml$^{-1}$ puis extrait aux ultrasons pendant 5 minutes à une température de 50 °C. La solution est ensuite filtrée sous vide sur un entonnoir contenant un disque fritté en verre de porosité 3.

Le résidu est solubilisé avec 25 ml de méthanol puis extrait aux ultrasons pendant 5 minutes à une température de 50 °C. La solution est filtrée sous vide sur un entonnoir contenant un disque fritté en verre de porosité 3. Cette étape d'extraction est réalisée 3 fois et les filtrats réunis sont mis à sec par un évaporateur rotatif sous pression réduite. Le rendement d'extraction obtenu est de 22 %.

Une quantité d'extrait est solubilisée dans du méthanol pour réaliser une solution à 10 mg.ml$^{-1}$. La solution est centrifugée à 10 000 g pendant 10 minutes Un volume de 100 µl du surnageant est ajouté dans un tube à essai avec 100 µl d'une solution de p-anisaldéhyde solubilisée à 50 % dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage de protodioscine permet de calculer une concentration de 0,29 mg.ml$^{-1}$ soit 29 % (masse/masse) dans l'extrait méthanolique et 6,4 % (masse/masse) équivalent protodioscine dans l'échantillon de Trigonella foenum graecum.

Eléments de validation de la méthode

Le coefficient de variation en répétabilité (CVr) réalisé sur 6 mesures est de 2% et en fidélité intermédiaire (CVR) réalisé sur 12 mesures est de 3%. Un dopage réalisé à 150% sur l'extrait méthanolique de *Trigonella foenum graecum* permet d'obtenir un taux de recouvrement 102 ± 2% avec :

[Math 2]

$$Taux\ de\ recouvrement = \frac{teneur\ dop\acute{e}e}{teneur\ non\ dop\acute{e}e + teneur\ ajout} \times 100$$

Où :

Teneur non dopée : quantité de saponines totales mesurée dans l'extrait initial

Teneur ajout : quantité de saponine de référence ajoutée dans l'extrait initial (50% de la valeur initiale)

Teneur dopée : quantité de saponines totales mesurée dans l'extrait dopé (à 150%)

Elément de comparaison

Le procédé selon l'invention a été comparé avec une méthode développée en interne sur CLHP-DEDL ainsi que par la méthode gravimétrique (Budan et al., 2013). Dans l'échantillon de *Trigonella foenum graecum,* la teneur totale en saponines est de 6,4 % (masse/masse) contre 6,2 % (masse/masse) équivalent protodioscine en CLHP-DEDL. La méthode gravimétrique, qui a tendance à surestimer la quantité de saponines permet d'obtenir une valeur de 11,2 % (masse/masse) dans l'échantillon. Le [Table 3] regroupe les données majeures obtenues pour la mesure de la teneur totale en saponines dans l'échantillon de *Trigonella foenum graecum.*

[Table 3]

| Réalisée par le procédé selon l'invention | | | |
|---|---|---|---|
| Teneur (eq. protodioscine) | Taux de recouvrement sur extrait | Teneur (eq. protodioscine) par CLHP-DEDL | Teneur par gravimétrie |
| 6,4 % | 102 ± 2 % | 6,2 % | 11,2 % |

**Exemple 4 : Détermination de la teneur totale en saponines dans un échantillon de *Yucca schidigera***

Il est connu que le *Yucca schidigera* comprend des saponines stéroïdiques. Dans cet exemple, la protodioscine est utilisée à titre de standard de saponines.

Etablissement d'une courbe étalon avec une saponine de référence

La courbe étalon est réalisée conformément à celle de l'exemple 3.

Détermination de la teneur totale en saponines dans un échantillon de *Yucca schidigera*

Un échantillon de *Yucca schidigera* est solubilisé dans du dichlorométhane afin d'obtenir une solution à 20 mg.ml$^{-1}$ puis extrait aux ultrasons pendant 5 minutes à une température de 50 °C. La solution est ensuite filtrée sous vide sur un entonnoir contenant un disque fritté en verre de porosité 3.

Le résidu est solubilisé avec 25 ml de méthanol puis extrait aux ultrasons pendant 5 minutes à une température de 50 °C. La solution est filtrée sous vide sur un entonnoir contenant un disque fritté en verre de porosité 3. Cette étape d'extraction est réalisée 3 fois et les filtrats réunis sont mis à sec par un évaporateur rotatif sous pression réduite. Le rendement d'extraction obtenu est de 28 %.

Une quantité d'extrait est solubilisée dans du méthanol pour réaliser une solution à 10 mg.ml$^{-1}$. La solution est centrifugée à 10 000 g pendant 10 minutes. Un volume de 100 $\mu$l du surnageant est ajouté dans un tube à essai avec 100 $\mu$l d'une solution de p-anisaldéhyde solubilisée à 50 % dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage de protodioscine permet de calculer une concentration de 0,28 mg.ml$^{-1}$ soit 28 % (masse/masse) de protodioscine dans l'extrait méthanolique et 7,8 % (masse/masse) équivalent protodioscine dans l'échantillon de *Yucca schidigera.*

Eléments de validation de la méthode

Le coefficient de variation en répétabilité (CVr) réalisé sur 3 mesures est de 2 %. Un dopage réalisé à 125 % sur l'extrait méthanolique de *Yucca schidigera* permet d'obtenir un taux de recouvrement 100 $\pm$ 2% avec :

[Math 2]

$$Taux\ de\ recouvrement = \frac{teneur\ dop\acute{e}e}{teneur\ non\ dop\acute{e}e + teneur\ ajout} \times 100$$

Où:

Teneur non dopée : quantité de saponines totales mesurée dans l'extrait initial
Teneur ajout : quantité de saponine de référence ajoutée dans l'extrait initial (25% de la valeur initiale)
Teneur dopée : quantité de saponines totales mesurée dans l'extrait dopé (à 125%)

Elément de comparaison

Le procédé selon l'invention a été comparé avec une méthode développée en interne sur CLHP-DEDL. Dans l'échantillon de *Yucca schidigera,* la teneur totale en saponines est de 7,8 % (masse/masse) contre 8,4 % (masse/masse) équivalent protodioscine en CLHP-DEDL.

Le [Table 4] regroupe les données majeures obtenues pour la mesure de la teneur totale en saponines dans l'échantillon de *Yucca schidigera.*

[Table 4]

| Réalisée par le procédé selon l'invention | | |
|---|---|---|
| Teneur (eq. protodioscine) | Taux de recouvrement sur extrait | Teneur (eq. protodioscine) par CLHP-DEDL |
| 7,8 % | 100 ± 2 % | 8,4 % |

Les exemples 1 à 4 mettent en évidence que le procédé selon l'invention donne une valeur en saponines très proche de la valeur développée en interne sur CLHP-DEDL. La mise en œuvre du procédé selon l'invention est en outre beaucoup plus simple et met en œuvre des moyens moins onéreux que la méthode sur CLHP-DEDL

**Exemple 5 : Détermination de la teneur totale en saponines dans un mélange contenant des saponines stéroïdiques et triterpéniques.**

Le procédé selon l'invention a été mis en œuvre sur des échantillons comprenant un mélange d'un extrait de *Camellia oleifera* contenant des saponines triterpéniques et d'un extrait de *Trigonella foenum graecum* contenant des saponines stéroïdiques.

Estimation « théorique » de la teneur totale en saponines

On entend par « estimation théorique » la teneur en saponines obtenue en additionnant les teneurs en saponines de l'extrait de *Camellia oleifera* et de l'extrait de *Trigonella foenum graecum* obtenues séparément.

La teneur en saponines (triterpéniques) de l'extrait de *Camellia oleifera* d'une part et la teneur en saponines (stéroïdiques) de l'extrait de *Trigonella foenum graecum* d'autre part, ont été déterminée conformément au protocole présenté dans l'exemple 3 en utilisant la protodioscine à titre de standard de saponines. Les teneurs en saponines obtenues sont de 26 % dans l'extrait de *Camellia oleifera* et de 29 % dans l'extrait de *Trigonella foenum graecum.*

Le [Table 5] présente la détermination des teneurs totales en saponines en fonction des pourcentages de chacun des extraits introduits dans trois échantillons de mélanges.

[Table 5]

| Proportion extrait Camellia oleifera / Trigonella foenum graecum (%m/m) | Saponines de Camellia oleifera (m/m) eq. protodioscine | Saponines de Trigonella foenum graecum (m/m) eq. protodioscine | Teneur « théorique » totale en saponines du mélange (m/m) eq. protodioscine |
|---|---|---|---|
| 80/20 | 20,9 % | 5,9 % | 26,8 % |
| 50/50 | 13,1% | 14,7 % | 27,8 % |
| 20/80 | 5,2 % | 23,5 % | 28,7 % |

Détermination expérimentale de la teneur totale en saponines

La teneur totale en saponines a été déterminée par le procédé selon la présente invention pour des mélanges d'extraits correspondant aux proportions suivantes : 80/20 ; 50/50 et 20/80 de *Camellia oleifera* / *Trigonella foenum graecum* (%m/m).

Etablissement d'une courbe étalon avec une saponine de référence

La teneur totale en saponines des échantillons contenant à la fois des saponines triterpéniques et stéroïdiques, peut être exprimée par tout standard de saponines provenant du groupe stéroïdique ou bien triterpénique. Dans cet exemple, la protodioscine est utilisée à titre de standard de saponines pour estimer la teneur totale en saponines des différents échantillons de mélanges.

La courbe étalon est réalisée conformément à celle de l'exemple 3.

Détermination de la teneur totale en saponines dans les différents échantillons de mélanges

Pour les différents échantillons (contenant des extraits de *Camellia oleifera* et de *Trigonella foenum graecum*), une quantité est solubilisée dans du méthanol pour réaliser une solution à 10 mg.ml-1. La solution est centrifugée à 10 000 g pendant 10 minutes. Un volume de 100 µl du surnageant est ajouté dans un tube à essai avec 100 µl d'une solution de p-anisaldéhyde solubilisée à 50 % dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60 °C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage de protodioscine permet d'estimer la teneur totale en saponines dans les différents mélanges.

Le [Table 6] présente les valeurs dites « expérimentales » c'est-à-dire obtenues pour les différents échantillons contenant des mélanges d'extraits de *Camellia oleifera* et de *Trigonella foenum graecum* ainsi que les valeurs dites « théoriques » définies ci-dessus (c.f. [Table 5] ci-dessus).

[Table 6]

| Proportion extrait Camellia oleifera / Tigonella foenum graecum (%m/m) | Teneur totale expérimentale (m/m) eq. protodioscine | Teneur totale théorique (m/m) eq. protodiosicine | Biais relatif |
|---|---|---|---|
| 80/20 | 27,1 % | 26,8 % | 1,1 % |
| 50/50 | 26,9 % | 27,8 % | -3,2 % |
| 20/80 | 28,0 % | 28,7 % | -2,4 % |

Avec :

[Math 3]

$$Biais\ relatif = \frac{Teneur\ expérimentale - teneur\ théorique}{teneur\ théorique} \times 100$$

Où :

- Teneur expérimentale : quantité totale en saponines déterminée expérimentalement dans les échantillons de mélanges
- Teneur théorique : quantité totale en saponines calculée en additionnant les teneurs en saponines des extraits de *Camellia oleifera* et de *Trigonella foenum graecum.*

Le procédé selon l'invention permet de déterminer la teneur totale en saponines des trois mélanges d'extraits de *Camellia oleifera* et de *Trigonella foenum graecum.* Les valeurs obtenues en appliquant le procédé selon l'invention à un mélange d'extraits ne sont éloignées que d'un biais relatif de 3 % des valeurs obtenues en appliquant le procédé selon l'invention à chaque extrait constituant ledit mélange.

**Exemple 6 : Détermination des teneurs respectives en saponines triterpéniaues et en saponines stéroïdiaues dans un échantillon contenant des saponines triterpéniaues et stéroïdiaues**

Le procédé selon l'invention a été a été appliqué à des échantillons de mélanges d'extrait de *Camellia oleifera* et d'extrait de *Trigonella foenum graecum* afin de déterminer la teneur totale en saponines ainsi que les teneurs respectives en saponines triterpéniques et en saponines stéroïdiques dans ces échantillons de mélanges. Ces déterminations sont réalisées en trois étapes.

La première étape correspond à la détermination de la teneur totale en saponines dans un mélange contenant des saponines stéroïdiques et triterpéniques, cette étape est décrite dans l'exemple 5 ci-dessus. Elle met notamment en œuvre une étape de mesure de l'absorbance à 600 nm du produit obtenu à l'issue d'une réaction chromogène sur l'échantillon.

La seconde étape correspond à la détermination de la teneur totale en saponines stéroïdiques dans un mélange contenant des saponines stéroïdiques et triterpéniques. Elle met notamment en œuvre une étape de mesure de l'absorbance à 425 nm du produit obtenu à l'issue d'une réaction chromogène sur l'échantillon.

La troisième étape permet, par différence, de déterminer la teneur totale en saponines triterpéniques dans un mélange contenant des saponines stéroïdiques et triterpéniques.

**Première étape** : Détermination de la teneur totale en saponines

Comme déjà mentionné, la première étape correspond à l'exemple 5 ci-dessus, les valeurs obtenues pour les différents échantillons sont présentées dans le [Table 6] ci-dessus.

**Seconde étape** : Détermination de la teneur en saponines stéroïdiques

Pour la seconde étape, on utilise un standard de saponines stéroïdiques. Par le procédé selon l'invention, la teneur en saponines stéroïdiques a été déterminée pour des échantillons de mélanges correspondant aux proportions suivantes : 80/20 ; 50/50 et 20/80 de *Camellia oleifera / Trigonella foenum graecum* (%m/m).

Etablissement d'une courbe étalon avec une saponine de référence

La teneur en saponines stéroïdique est exprimée avec un standard appartenant aux groupes des saponines stéroïdiques. Dans cet exemple, la protodioscine est utilisée à titre de standard des saponines.
5 solutions étalon sont préparées en introduisant dans 5 tubes à essais un volume de 100 $\mu$l d'une solution étalon de protodioscine dans du méthanol, les concentrations desdites solutions étalon étant comprises entre 0,2 et 1 mg.ml$^{-1}$ On ajoute à chacune de ces solutions étalon 100 $\mu$l d'une solution de p-anisaldéhyde solubilisée à 10 % dans de l'éthanol (volume/volume), puis 2 ml d'une solution d'acide sulfurique éthanolique à 12,5 % (volume/volume). La concentration en acide sulfurique de la solution est donc de 11 % en volume par rapport au volume total du mélange réactionnel. Les tubes à essai sont bouchés et incubés dans un bain-marie à 60°C pendant 20 minutes puis placés dans un bain d'eau glacée pendant 10 minutes. On obtient ainsi 5 solutions dont les concentrations de protodioscine dans le mélange réactionnel sont comprises entre 4 x 10-3 g.l$^{-1}$ et 40 x 10-3 g.l$^{-1}$ (4 $\mu$g.ml$^{-1}$ à 40 $\mu$g.ml$^{-1}$). L'absorbance spécifique de chaque étalon stéroïdique est mesurée à 425 nm contre un blanc réalisé dans les mêmes conditions. On obtient ainsi pour chaque concentration de protodioscine une absorbance que l'on reporte en fonction de la concentration pour obtenir une courbe étalon présentée en [Fig 3].
L'équation de la droite représentée en [Fig 3] est y = 0,0309x + 0,0175
avec R$^2$ = 0,9994

Détermination de la teneur en saponines stéroïdiques dans les différents échantillons de mélanges

Pour chaque échantillon de mélanges, une quantité est solubilisée dans du méthanol pour réaliser une solution à 10 mg.ml-$^1$. La solution est centrifugée à 10 000 g pendant 10 minutes. Un volume de 100 $\mu$l du surnageant est ajouté dans un tube à essai avec 100 $\mu$l d'une solution de p-anisaldéhyde solubilisée à 10 % dans de l'éthanol (volume/volume). Un volume de 2 ml d'une solution d'acide sulfurique éthanolique à 12,5 % (volume/volume) est ajouté au tube à essai. La concentration en acide sulfurique de la solution est donc de 1 1% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines stéroïdiques est mesurée à 425 nm contre un blanc réalisé dans les mêmes conditions. La valeur obtenue reportée sur la droite d'étalonnage de protodioscine permet d'estimer la teneur en saponines stéroïdiques dans les différents échantillons de mélanges.
Le [Table 7] présente les valeurs dites « expérimentales » en saponines stéroïdiques obtenues pour les différents échantillons de mélanges ainsi que les valeurs dites « théoriques » qui correspondent aux valeurs de saponines stéroïdiques présentées dans le [Table 5].

[Table 7]

| Proportion extrait Camellia oleifera / Tigonella foenum graecum (%m/m) | Teneur totale expérimentale en saponines stéroïdiques (m/m) eq. protodioscine | Teneur théorique en saponines stéroïdiques (m/m) eq. protodiosicine | Biais relatif |
|---|---|---|---|
| 80/20 | 5,9 % | 5,9 % | 0 % |
| 50/50 | 14,8 % | 14,7 % | 0,68 % |
| 20/80 | 23,2 % | 23,5 % | -1,28 % |

Avec :

[Math 3]

$$Bais\ relatif = \frac{Teneur\ expérimentale - teneur\ théorique}{teneur\ théorique} \times 100$$

Où:

- Teneur expérimentale : quantité de saponines stéroïdiques déterminée expérimentalement dans les échantillons de mélanges ;

- Teneur théorique : quantité de saponines stéroïdiques déterminée sur la base de l'extrait contenant essentiellement des saponines stéroïdiques.

**Troisième étape** : détermination de la teneur en saponines tritérpéniques

La teneur en saponines triterpéniques présentes dans les échantillons de mélanges contenant à la fois des saponines triterpéniques et stéroïdiques est déterminée de la façon suivante :

[Math 5]

$$Teneur\ saponines\ triterpéniques$$
$$= Teneur\ totale\ en\ saponines - teneur\ en\ saponines\ stéroïdiques$$

Où:

- Teneur totale en saponines correspond à la teneur totale en saponines déterminée à la première étape ci-dessus en mg/g
- Teneur en saponines stéroïdiques correspond à la teneur en saponines stéroïdiques déterminée à la seconde étape ci-dessus en mg/g

Le [Table 8] présente les teneurs en saponines triterpéniques calculées par différence entre les données expérimentales obtenues à la première étape ([Table 6]) et les données expérimentales obtenues à la seconde étape ([Table 7]) puis comparées aux valeurs théoriques établies au [Table 5], 1 [ère] colonne en mg/g.

[Table 8]

| Proportion extrait Camellia oleifera / Tigonella foenum graecum (%m/m) | Teneur totale expérimentale en saponines triterpéniques (mg/g) eq. protodioscine | Teneur théorique en saponines triterpéniques (mg/g) eq. protodiosicine | Biais relatif |
|---|---|---|---|
| 80/20 | 212 (271-59) | 209 | 1,4 % |
| 50/50 | 121 (269-59) | 131 | -7,6 % |
| 20/80 | 48 (280-232) | 52 | -7,7 % |

Avec :

[Math 3]

$$Biais\ relatif = \frac{Teneur\ expérimentale - teneur\ théorique}{teneur\ théorique} \times 100$$

Où :

- Teneur expérimentale : quantité de saponines triterpéniques déterminée expérimentalement dans les échantillons de mélanges en mg/g
- Teneur théorique : quantité de saponines triterpéniques déterminée sur la base de l'extrait contenant essentiellement des saponines triterpéniques en mg/g.

Les valeurs des teneurs en saponines stéroïdiques d'une part et en saponines triterpéniques d'autre part obtenues en appliquant le procédé selon l'invention à un mélange d'extraits ne sont éloignées respectivement que d'un biais relatif de 1 % et 8 % des valeurs obtenues en appliquant le procédé selon l'invention à chaque extrait constituant ledit mélange.

**Exemple 7 : Détermination de la teneur totale en saponines dans un échantillon liquide de *Yucca schidigera***

La détermination de la teneur totale en saponines est effectuée directement sans étape d'extraction préalable.

Etablissement d'une courbe étalon avec une saponine de référence

Dans cet exemple, la protodioscine est utilisée à titre de standard de saponines.

La courbe étalon est réalisée conformément à celle de l'exemple 3.

Détermination de la teneur totale en saponines dans un échantillon liquide de *Yucca schidiaera*

Un échantillon liquide de *Yucca schidigera* est introduit dans du méthanol pour réaliser une solution à 10 mg.ml$^{-1}$. La solution est centrifugée à 10 000 g pendant 10 minutes. Un volume de 100 $\mu$l du surnageant est ajouté dans un tube à essai avec 100 $\mu$l d'une solution de p-anisaldéhyde solubilisée à 50 % dans du méthanol (volume/volume). Un volume de 2 ml d'une solution d'acide sulfurique aqueuse à 50 % (volume/volume) est ajouté au tube à essai. La concentration en acide sulfurique de la solution est donc de 45% en volume par rapport au volume total du mélange réactionnel. Le tube à essai bouché est incubé dans un bain-marie à 60°C pendant 20 minutes puis placé dans un bain d'eau glacée pendant 10 minutes. L'absorbance spécifique des saponines est mesurée à 600 nm contre un blanc réalisé dans les mêmes conditions. La valeur obtenue reportée sur la droite d'étalonnage de protodioscine permet de calculer une concentration de 0,081 mg.ml$^{-1}$ soit 8,1 % (masse/masse) équivalent protodioscine dans l'échantillon liquide de *Yucca schidigera.*

Eléments de validation de la méthode

Le coefficient de variation en répétabilité (CVr) réalisé sur 3 mesures est de 1 %. Un dopage réalisé à 125 % sur l'échantillon de *Yucca schidigera* permet d'obtenir un taux de recouvrement 97 $\pm$ 2% avec :

[Math 2]

$$Taux\ de\ recouvrement = \frac{teneur\ dop\acute{e}e}{teneur\ non\ dop\acute{e}e + teneur\ ajout} \times 100$$

Où :

- Teneur non dopée : quantité de saponines totales mesurée dans l'échantillon initial,

- Teneur ajout : quantité de saponine de référence ajoutée dans l'échantillon initial (25% de la valeur initiale)

- Teneur dopée : quantité de saponines totales mesurée dans l'échantillon dopé (à 125%).

Elément de comparaison

La présente méthode a été comparée avec une méthode développée en interne sur CLHP-DEDL. Dans l'échantillon de *Yucca schidigera,* la teneur totale en saponines est de 8,1 % (masse/masse) contre 7,2 % (masse/masse) équivalent protodioscine en CLHP-DEDL.

Le [Table 9] regroupe les données majeures obtenues pour la teneur totale en saponines dans l'échantillon de *Yucca schidigera.*

[Table 9]

| Réalisée par le procédé selon l'invention | | |
|---|---|---|
| Teneur (eq. protodioscine) | Taux de recouvrement sur extrait | Teneur (eq. protodioscine) par CLHP-DEDL |
| 8,1 % | 97 ± 2 % | 7,2 % |

Le procédé selon l'invention donne une valeur en saponines très proche de la valeur développée en interne sur CLHP-DEDL. La mise en œuvre du procédé selon l'invention est en outre beaucoup plus simple et met en œuvre des moyens moins onéreux que la méthode sur CLHP-DEDL.

**Exemples comparatifs 8-variation de la concentration en acide sulfurique**

Le protocole pour l'établissement d'une courbe étalon avec une saponine de référence de l'exemple 1 a été reproduit en faisant varier la concentration d'acide sulfurique.

1. Acide sulfurique 25%, 30% et 35% vol/vol

Une solution étalon a été préparée en introduisant dans un tube à essai un volume de 100 $\mu$l d'une solution étalon d'escin IB à 5 mg.ml$^{-1}$ dans du méthanol. On ajoute à cette solution étalon du p-anisaldéhyde de manière à obtenir une solution étalon à 3% en p-anisaldéhyde et de l'acide sulfurique de manière à obtenir une solution étalon à 25% en acide sulfurique. Le tube à essai est bouché et incubé dans un bain-marie à 60°C pendant 20 minutes puis placé dans un bain d'eau glacée pendant 10 minutes. Le p-anisaldéhyde n'est pas soluble dans ladite solution étalon. L'expérience a été reproduite en diminuant la concentration en p-anisaldéhyde à 0,5%, une solution limpide a été obtenue.

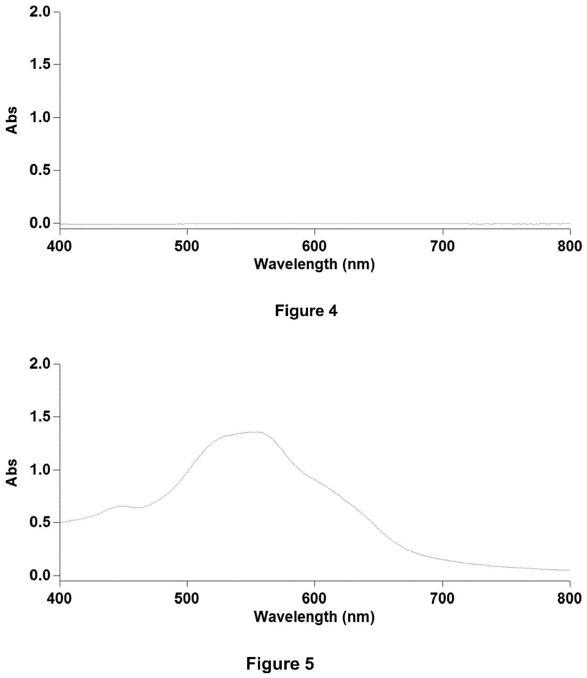

[Fig.4] présente le spectre d'absorbance de cette solution dans le domaine des longueurs d'onde 400-800 nm : aucun chromophore n'est formé. Il n'est donc pas possible de réaliser une courbe-étalon à cette concentration en acide sulfurique.
Le même protocole a été mis en œuvre avec une solution similaire mais comprenant 30 % d'acide sulfurique vol/vol ou 35% d'acide sulfurique vol/vol. Les mêmes résultats ont été obtenus. Ainsi, aucun chromophore n'est formé dans le domaine des longueurs d'onde 400-800 nm.

2. Acide sulfurique 70%vol/vol

Une solution étalon a été préparée en introduisant dans un tube à essai un volume de 100 $\mu$l d'une solution étalon d'escin IB à 1,25 mg.ml$^{-1}$ dans du méthanol. On ajoute à cette solution étalon du p-anisaldéhyde de manière à obtenir une solution étalon à 3% en p-anisaldéhyde et de l'acide sulfurique de manière à obtenir une solution étalon à 70% en acide sulfurique. Le tube à essai est bouché et incubé dans un bain-marie à 60°C pendant 20 minutes puis placé dans un bain d'eau glacée pendant 10 minutes.
[Fig.5] présente le spectre d'absorbance de cette solution dans le domaine des longueurs d'onde 400-800 nm. On observe le développement d'un chromophore dont le maxima d'absorbance est situé à 545 nm, c'est-à-dire en-dehors de la plage de longueur d'onde de la mesure de l'absorbance du procédé selon l'invention (580 à 610 nm).

3. Acide sulfurique 40%vol/vol

Une solution étalon a été préparée en introduisant dans un tube à essai un volume de 100 $\mu$l d'une solution étalon d'escin IB à 5 mg.ml$^{-1}$ dans du méthanol. On ajoute à cette solution étalon du p-anisaldéhyde de manière à obtenir une solution étalon à 3% en p-anisaldéhyde et de l'acide sulfurique de manière à obtenir une solution étalon à 40% en acide sulfurique. Le tube à essai est bouché et incubé dans un bain-marie à 60°C pendant 20 minutes puis placé dans un bain d'eau glacée pendant 10 minutes.

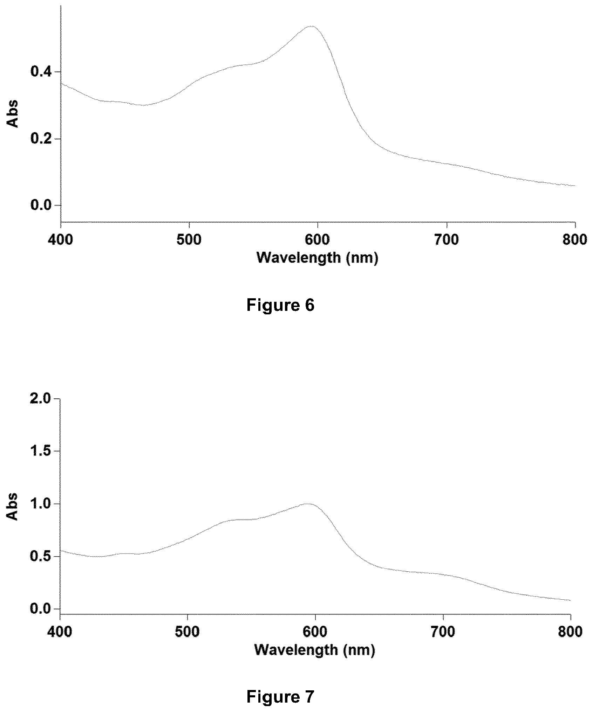

[Fig.6] présente le spectre d'absorbance de cette solution dans le domaine des longueurs d'onde 400-800 nm. On observe le développement d'un chromophore dont le maxima d'absorbance, est situé à 600 nm.
Une deuxième solution étalon d'escin IB à 2,5 mg.ml$^{-1}$ dans du méthanol est réalisée dans les mêmes conditions. L'équation de la droite de calibration de l'escin IB, établie à partir d'une calibration de ces 2 points (5 et 2,5 mg/ml), correspondant à l'absorbance en fonction de la concentration (en $10^{-3}$ g.l$^{-1}$) est : y = 0,11092x - 0,0306.

### 4. Acide sulfurique 45%vol/vol

Une solution étalon a été préparée en introduisant dans un tube à essai un volume de 100 $\mu$l d'une solution étalon d'escin IB à 5 mg.ml$^{-1}$ dans du méthanol. On ajoute à cette solution étalon du p-anisaldéhyde de manière à obtenir une solution étalon à 3% en p-anisaldéhyde et de l'acide sulfurique de manière à obtenir une solution étalon à 45% en acide sulfurique. Le tube à essai est bouché et incubé dans un bain-marie à 60°C pendant 20 minutes puis placé dans un bain d'eau glacée pendant 10 minutes.

[Fig.7] présente le spectre d'absorbance de cette solution dans le domaine des longueurs d'onde 400-800 nm. On observe le développement d'un chromophore dont le maxima d'absorbance est situé à 600 nm.

Une deuxième solution étalon d'escin IB à 2,5 mg.ml$^{-1}$ dans du méthanol est réalisée dans les mêmes conditions. L'équation de la droite de calibration de l'escin IB, établie à partir d'une calibration de ces 2 points (5 et 2,5 mg/ml), correspondant à l'absorbance en fonction de la concentration (en 10$^{-3}$ g.l$^{-1}$) est : y = 0,19128x - 0,0368.

### 5. Acide sulfurique 55 %vol/vol

Une solution étalon a été préparée en introduisant dans un tube à essai un volume de 100 $\mu$l d'une solution étalon d'escin IB à 2,5 mg.ml$^{-1}$ dans du méthanol. On ajoute à cette solution étalon du p-anisaldéhyde de manière à obtenir une solution étalon à 3% en p-anisaldéhyde et de l'acide sulfurique de manière à obtenir une solution étalon à 55% en acide sulfurique. Le tube à essai est bouché et incubé dans un bain-marie à 60°C pendant 20 minutes puis placé dans un bain d'eau glacée pendant 10 minutes.

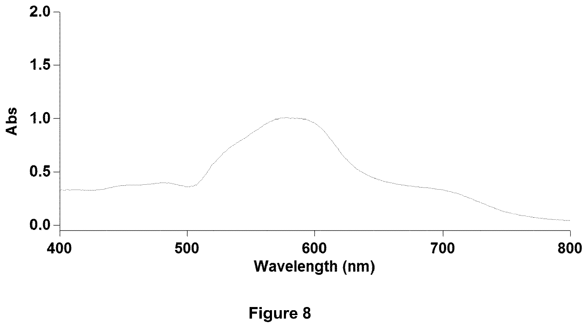

[Fig.8] présente le spectre d'absorbance de cette solution dans le domaine des longueurs d'onde 400-800 nm. On observe le développement d'un chromophore dont le maxima d'absorbance, est situé entre 585 et 600 nm.

Une deuxième solution étalon d'escin IB à 1,25 mg.ml$^{-1}$ dans du méthanol est réalisée dans les mêmes conditions. L'équation de la droite de calibration de l'escin IB, établie à partir d'une calibration de ces 2 points (2,5 et 1,25 mg/ml), correspondant à l'absorbance en fonction de la concentration (en 10$^{-3}$ g.l$^{-1}$) est : y = 0,38856x - 0,0074.

Ces exemples comparatifs montrent que le mélange réactionnel défini selon la présente invention comprenant du p-anisaldéhyde, et de l'acide sulfurique en une concentration allant de 40 à 55 % vol/vol en présence de saponines permet la formation d'un chromophore dont le maxima d'absorbance est situé entre 580 et 610 nm, en particulier à 600 nm.

### Exemples 9-détermination de la teneur totale en saponines d'un échantillon de *Camellia Oleifera*

Les spectres d'absorbance réalisés aux exemples 8.3 à 8.5 avec des solutions comprenant respectivement 40%, 45% et 55% d'acide sulfurique ont permis l'obtention de 3 courbes étalon.

Puis le dosage total des saponines d'un extrait de *Camellia oleifera* est effectué avec 3 échantillons de cet extrait à différentes concentrations d'acide sulfurique correspondant à 40%, 45% et 55%vol/vol. Ces dosages sont effectués selon le protocole détaillé au paragraphe "Détermination de la teneur totale en saponines dans un échantillon de *Camellia oleifera* " de l'exemple 1.

### 1. Extrait à 40% d'acide sulfurique

Une quantité d'extrait est solubilisée dans du méthanol pour réaliser une solution à 10 mg.ml$^{-1}$, 100 $\mu$l de cette solution sont placés dans un tube à essai. On ajoute à cette solution étalon du p-anisaldéhyde de manière à obtenir une solution étalon à 3% en p-anisaldéhyde et de l'acide sulfurique de manière à obtenir une solution étalon à 40% en acide sulfurique. Le tube à essai bouché est incubé dans un bain-marie à 60°C pendant 20 minutes puis placé dans un bain d'eau glacée pendant 10 minutes. L'absorbance spécifique des saponines est mesurée à 600 nm. La valeur obtenue reportée sur la droite d'étalonnage d'escin IB réalisée à l'exemple 8.3 permet de déterminer le pourcentage (masse/masse) équivalent escin IB dans l'échantillon de *Camellia oleifera.*

Cet essai est reproduit deux fois, les résultats sont consignés dans le tableau 10.

### 2. Extrait à 45% d'acide sulfurique

Une quantité d'extrait est solubilisée dans du méthanol pour réaliser une solution à 10 mg.ml$^{-1}$, 100 $\mu$l de cette solution sont placés dans un tube à essai. On ajoute à cette solution étalon du p-anisaldéhyde de manière à obtenir une solution étalon à 3% en p-anisaldéhyde et de l'acide sulfurique de manière à obtenir une solution étalon à 45% en acide sulfurique. Le tube à essai bouché est incubé dans un bain-marie à 60°C pendant 20 minutes puis placé dans un bain d'eau glacée pendant 10 minutes. L'absorbance spécifique des saponines est mesurée à 600 nm. La valeur obtenue reportée sur la droite d'étalonnage d'escin IB réalisée à l'exemple 8.4 permet de déterminer le pourcentage (masse/masse) équivalent escin IB dans l'échantillon de *Camellia oleifera.*

Cet essai est reproduit deux fois, les résultats sont consignés dans le tableau 10.

3. Extrait à 55% d'acide sulfurique

Une quantité d'extrait est solubilisée dans du méthanol pour réaliser une solution à 5 mg.ml$^{-1}$, 100 $\mu$l de cette solution sont placés dans un tube à essai. On ajoute à cette solution étalon du p-anisaldéhyde de manière à obtenir une solution étalon à 3% en p-anisaldéhyde et de l'acide sulfurique de manière à obtenir une solution étalon à 55% en acide sulfurique. Le tube à essai bouché est incubé dans un bain-marie à 60°C pendant 20 minutes puis placé dans un bain d'eau glacée pendant 10 minutes. L'absorbance spécifique des saponines est mesurée à 600 nm. La valeur obtenue reportée sur la droite d'étalonnage d'escin IB réalisée à l'exemple 8.5 permet de déterminer le pourcentage (masse/masse) équivalent escin IB dans l'échantillon de *Camellia oleifera.*

Cet essai est reproduit deux fois, les résultats sont consignés dans le tableau 10.

[Table 10]

| Quantité $H_2SO_4$ (%v/v) | 40% | 45% | 55% |
|---|---|---|---|
| Pourcentage saponines dans l'extrait (%m/m) (n=2) | 30,7 ± 1,0% | 29,8 ± 0,5% | 30,1 ± 0,4% |

Le pourcentage de saponines obtenu dans l'extrait de *Camellia oleifera* est similaire pour les différentes quantités d'acide sulfurique. Le procédé selon la présente invention, qui met notamment en oeuvre une solution comprenant du p-anisaldéhyde, et de l'acide sulfurique en une concentration allant de 40 à 55 % vol/vol permet la détermination de la teneur totale en saponines d'un échantillon à 600 nm.

**Exemples comparatifs 10-variation de la température**

L'exemple conforme retenu correspond à l'exemple 9.2 -à 45% d'acide sulfurique-avec la solution étalon 8.4 comme reference.

Pour cet exemple conforme, les absorbances obtenues à 600 nm pour *Camellia oleifera* et l'escin sont de 0,51 (exemple 9.2) et 0,55 (exemple 8.2) respectivement. Ces absorbances sont similaires pour les deux solutions contenant une quantité identique de saponines (3 mg/ml). Ces résultats montrent qu'aucune interférence ne se forme à 600 nm dans l'extrait de *Camellia oleifera* avec les conditions chromogéniques utilisées.

Pour l'exemple comparatif 10

Les exemples 8.4 et 9 .2 sont reproduits, cependant après introduction des différents réactifs dans le tube à essai, celui-ci est bouché est incubé dans un bain-marie à 90°C pendant 20 minutes.

Les absorbances obtenues à 600 nm pour *Camellia oleifera* et l'escin sont de 1,28 et 1,05 respectivement. L'absorbance de l'extrait de Camellia Oleifera est supérieure de 22% par rapport à la solution d'escin indiquant que des interférences se sont formées dans cet extrait. Dans ces conditions réactionnelles, le dosage ne permet pas une quantification précise des saponines.

Le procédé selon la présente invention, qui met notamment en oeuvre un chauffage du mélange réactionnel à une température allant de 45°C à 75°C permet la détermination de la teneur totale en saponines d'un échantillon entre 580 et 610 nm, en particulier à 600 nm.

**Références**

Arihara S., Haji K., Miyashita Y., Shobu H., Takemoto T., Taniguchi S. Quantitative détermination of saponin of gynostemma pentaphyllum. JPS60219556A. 1985.

Attele A. S., Wu J. A., Yuan C. S. « Ginseng pharmacology: multiple constituents and multiple actions ». Biochem. Pharmacol. 1999. Vol. 58, n°11, p. 1685-1693.

Baccou J. C., Lambert F., Sauvaire Y. « Spectrophotometric method for the détermination of total steroidal sapogenin ». The Analyst. 1977. Vol. 102, n°1215, p. 458.

Budan A., Tessier N., Saunier M., Gillmann L., Hamelin J., Chicoteau P., Richomme P., Guilet D. « Effect of several saponin containing plant extracts on rumen fermentation in vitro, Tetrahymena pyriformis and sheep erythrocytes ». J. Food Agric. Environ. 2013. Vol. 11, n°2, p. 576-582.

Grenby T. H. « Intense sweeteners for the food industry: an overview ». Trends Food Sci. Technol. 1991. Vol. 2, p. 2-6.

Güçlü-Üstündağ Ö., Mazza G. « Saponins: Properties, Applications and Processing ». Crit. Rev. Food Sci. Nutr. 2007. Vol. 47, n°3, p. 231-258.

Heng L., Vincken J.-P., Van Koningsveld G., Legger A., Gruppen H., Van Boekel T., Roozen J., Voragen F. « Bitterness of saponins and their content in dry peas ». J. Sci. Food Agric. 2006. Vol. 86, n°8, p. 1225-1231.

Hiai S., Oura H., Odaka Y., Nakajima T. « A colorimetric estimation of ginseng saponins ». Planta Med. 1975. Vol. 28, n°08, p. 363-369.

Kitagawa I. « Licorice root. A natural sweetener and an important ingrédient in Chinese medicine ». Pure Appl. Chem. 2002. Vol. 74, n°7, p. 1189-1198.

Martín R. S., Briones R. « Industrial uses and sustainable supply of Quillaja saponaria (Rosaceae) saponins ». Econ. Bot. 1999. Vol. 53, n°3, p. 302-311.

Nakajima H. Oura. T. « Color reaction of somme sapogenins and saponins with vanillin and sulfuric acid ». 1976. Vol. 29, p. 7.

Oda K., Matsuda H., Murakami T., Katayama S., Ohgitani T., Yoshikawa M. « Adjuvant and Haemolytic Activities of 47 Saponins Derived from Médicinal and Food Plants ». Biol. Chem. 2005. Vol. 381, n°1, p. 67-74.

Ross J., Miles G. D. « An apparatus for comparison of foaming properties of soaps and detergents ». Oil Soap. 1941. Vol. 18, n°5, p. 99-102.

Sparg S. G., Light M. E., Van Staden J. « Biological activities and distribution of plant saponins ». J. Ethnopharmacol. 2004. Vol. 94, n°2-3, p. 219-243.

Tenon M., Feuillère N., Roller M., Birtic S. « Rapid, cost-effective and accurate quantification of Yucca schidigera Roezl. steroidal saponins using HPLC-ELSD method ». Food Chem. 2017. Vol. 221, p. 1245-1252.

Vincken J.-P., Heng L., De Groot A., Gruppen H. « Saponins, classification and occurrence in the plant kingdom ». Phytochemistry. 2007. Vol. 68, n°3, p. 275-297.

CN106483084A "Method for measuring total saponins in radix panacis quinquefolii by aid of solid-phase extraction-colorimetric processes"

CN106596426A " Détection method applied in gynostemma total saponin extraction and separation process".

CN106404685A: Method for determination of total saponin content in health wine.

## Revendications

1. Procédé de détermination de la teneur totale en saponines d'un échantillon, ledit procédé comprenant au moins les étapes suivantes, dans cet ordre :

    (1) réaliser une réaction en ajoutant audit échantillon solubilisé dans au moins un solvant, du p-anisaldéhyde et de l'acide sulfurique, l'acide sulfurique étant présent en une quantité allant de 40 % à 50 %, tout préférentiellement égale à 45 %, en volume par rapport au volume total du mélange réactionnel ;
    (2) chauffer le mélange réactionnel à une température allant de 45°C à 75°C, de préférence allant de 55°C à 65°C, tout préférentiellement égale à 60°C, pour obtenir un chromophore en solution ;
    (3) mesurer l'absorbance de la solution du chromophore obtenu à une longueur d'onde allant de 580 nm 610 nm, de préférence de 590 nm à 605 nm, tout préférentiellement égale à 600 nm ;
    (4) réaliser une gamme de solutions étalon de saponines, dans les conditions de réaction des étapes (1) et (2), c'est-à-dire avec le même solvant, les mêmes quantités de p-anisaldéhyde et d'acide sulfurique, à la même température, les mêmes durées de chauffage à partir de solutions d'un standard de saponine à différentes concentrations, et dont les absorbances après réaction chromogène sont obtenues à la longueur d'onde définie à l'étape (3) ;
    (5) quantifier la teneur en saponines de l'échantillon en comparant l'absorbance de la solution du chromophore mesurée à l'étape (3) à la gamme d'absorbances des solutions étalon réalisées à l'étape (4).

2. Procédé selon la revendication 1, **caractérisé en ce qu'**il ne comprend pas d'étape d'extraction en phase solide, ni d'étape d'extraction liquide-liquide des saponines de l'échantillon.

3. Procédé selon l'une des revendications 1 ou 2, **caractérisé en ce que** l'échantillon utilisé à l'étape (1) est solubilisé dans un solvant choisi dans le groupe consistant en l'eau, les alcools en $C_1$-$C_4$ et leurs mélanges, de préférence le méthanol ou l'éthanol et de manière préférée le méthanol.

4. Procédé selon l'une quelconque des revendications 1 à 3, **caractérisé en ce que** la quantité de p-anisaldéhyde ajouté à l'étape (1) va de 0,1 % à 10 %, de préférence de 2 % à 5 %, tout préférentiellement 3 % en volume par rapport au volume total du mélange réactionnel.

**5.** Procédé selon l'une quelconque des revendications précédentes, **caractérisé en ce que** le temps de chauffage du mélange réactionnel va de 1 minute à 60 minutes, de préférence de 10 minutes à 30 minutes, tout préférentiellement 20 minutes.

**6.** Procédé selon l'une quelconque des revendications précédentes **caractérisé en ce que** l'échantillon comprend au moins une partie d'au moins une plante à saponines, de préférence choisie dans le groupe constitué par les *Theaceae,* les *Chenopodiaceae,* les *Fabaceae,* les *Agavaceae* et leurs mélanges et en particulier *Camellia olefeira, Chenopodium quinoa, Trigonella foenum graecum, Yucca schidigera* et leurs mélanges.

**7.** Procédé selon l'une quelconque des revendications précédentes **caractérisé en ce que** l'échantillon comprend au moins une partie d'au moins un organisme marin, de préférence choisi dans le groupe formé par les *Echinodermata* et les *Porifera* et leurs mélanges, en particulier les concombres de mer, les étoiles de mer et les éponges de mer et leurs mélanges.

**8.** Procédé selon l'une quelconque des revendications précédentes, **caractérisé en ce que** les saponines sont choisies dans le groupe consistant en les saponines triterpéniques, les saponines stéroïdiques et leurs mélanges.

**9.** Procédé de détermination de la teneur totale en saponines d'un échantillon selon l'une quelconque des revendications précédentes **caractérisé en ce qu'**un procédé de détermination de la teneur en saponines stéroïdiques dudit échantillon est mis en œuvre avant, après ou simultanément aux étapes (1) à (5), ledit procédé de détermination de la teneur en saponines stéroïdiques comprenant au moins les étapes suivantes, dans cet ordre :

(i) réaliser une réaction en ajoutant audit échantillon solubilisé dans au moins un solvant, du p-anisaldéhyde et de l'acide sulfurique, l'acide sulfurique étant présent en une quantité allant de 5 % à 25 %, de préférence de 10 % à 15 %, tout préférentiellement égale à 12,5 % en volume par rapport au volume total du mélange réactionnel ;
(ii) chauffer le mélange réactionnel à une température allant de 45°C à 80°C, de manière préférée égale à 60°C, pour obtenir un chromophore en solution ;
(iii) mesurer l'absorbance de la solution du chromophore obtenu à une longueur d'onde allant de 400 $^{nm}$ à 450 nm, de manière préférée 425 nm :
(iv) réaliser une gamme de solutions étalon de saponines stéroïdiques, dans les conditions de réaction des étapes (i) et (ii), et dont les absorbances après réaction chromogène sont obtenues à la longueur d'onde définie à l'étape (iii) ;
(v) quantifier la teneur en saponines stéroïdiques de l'échantillon en comparant l'absorbance de la solution du chromophore mesurée à l'étape (iii) à la gamme d'absorbances des solutions étalon réalisées à l'étape (iv).

**10.** Procédé de détermination de la teneur totale en saponines selon la revendication 9 **caractérisé en ce que** l'échantillon de l'étape (i) est solubilisé dans un solvant choisi dans le groupe consistant en l'eau, les alcools en $C_1$-$C_4$ et leurs mélanges, de préférence l'éthanol ou le méthanol, de manière préférée l'éthanol.

**11.** Procédé de détermination de la teneur totale en saponines selon la revendication 9 ou 10 **caractérisé en ce que** la quantité de p-anisaldéhyde à l'étape (i) va de 0,1 % à 2 %, de manière préférée 0,5 %, en volume par rapport au volume total du mélange réactionnel.

**12.** Procédé de détermination de la teneur totale en saponines selon l'une quelconque des revendications 9 à 11 **caractérisé en ce que** le temps de chauffage du mélange réactionnel selon l'étape (ii) va de 1 minute à 60 minutes, de préférence de 10 minutes à 30 minutes, tout préférentiellement 20 minutes.

**13.** Procédé de détermination de la teneur totale en saponines selon l'une quelconque des revendications précédentes **caractérisé en ce qu'**une étape préliminaire comprenant au moins une extraction des saponines de l'échantillon est effectuée avant l'étape (1) et, si présente, avant l'étape (i) ; ladite au moins une extraction des saponines de l'échantillon étant choisie de préférence dans le groupe consistant en les extractions sous pression, les extractions par macération, les extractions par micro-ondes, les extractions par ultrasons, les extractions par reflux, de manière préférée ladite étape préliminaire est une extraction des saponines de l'échantillon par ultrasons.

**14.** Procédé selon la revendication précédente **caractérisé en ce que** ladite au moins une extraction est effectuée en présence d'un solvant choisi dans le groupe consistant en les solvants aqueux, ioniques, organiques et leurs mélanges, de préférence dans le groupe consistant en l'eau, le méthanol, l'éthanol, l'acétonitrile, l'acétate d'éthyle et leurs mélanges, de manière préférée le méthanol.

15. Procédé de détermination de la teneur totale en saponines d'un échantillon selon l'une quelconque des revendications 9 à 14 **caractérisé en ce que** ledit échantillon comprend des saponines stéroïdiques et des saponines triterpéniques et **en ce que** la teneur en saponines triterpéniques dudit échantillon est déterminée par différence entre la teneur totale en saponines dudit échantillon déterminée à l'issue de l'étape (5) et la teneur en saponines stéroïdiques déterminée à l'issue de l'étape (v).

**Patentansprüche**

1. Verfahren zur Bestimmung des Gesamtsaponingehalts einer Probe, wobei das Verfahren mindestens die Schritte in dieser Reihenfolge umfasst:

   (1) Durchführung einer Reaktion durch Zugabe von p-Anisaldehyd und Schwefelsäure zu der in mindestens einem Lösungsmittel gelösten Probe, wobei die Schwefelsäure in einer Menge von 40-50%, vorzugsweise in einer Menge von 45% vorliegt, bezogen auf das Gesamtvolumen der Reaktionsmischung;
   (2) Erhitzen der Reaktionsmischung auf eine Temperatur im Bereich von 45°C bis 75°C, vorzugsweise im Bereich von 55°C bis 65°C, am meisten bevorzugt auf eine Temperatur von 60°C, um ein in Lösung vorliegendes Chromophor zu erhalten;
   (3) Messen der Absorption der Lösung des erhaltenen Chromophors bei einer Wellenlänge im Bereich von 580 nm bis 610 nm, vorzugsweise von 590 nm bis 605 nm, am meisten bevorzugt bei einer Wellenlänge von 600 nm;
   (4) Herstellen einer Reihe von Saponin-Standardlösungen unter den Reaktionsbedingungen der Schritte (1) und (2), d.h. unter Verwendung desselben Lösungsmittels, unter Verwendung derselben Mengen an p-Anisaldehyd und Schwefelsäure, bei derselben Temperatur und unter Verwendung derselben Erhitzungsdauern auf der Grundlage von Lösungen eines Saponin-Standards in verschiedenen Konzentrationen, wobei die Absorptionen dieser Saponin-Standardlösungen nach der chromogenen Reaktion bei der in Schritt (3) definierten Wellenlänge erhalten werden;
   (5) Quantifizierung des Saponingehalts der Probe durch Vergleich der in Schritt (3) gemessenen Absorption der Lösung des Chromophors mit dem Absorptionsbereich der in Schritt (4) hergestellten Standardlösungen.

2. Verfahren nach Anspruch 1, **dadurch gekennzeichnet, dass** es weder einen Schritt der Festphasenextraktion noch einen Schritt der Flüssig-Flüssig-Extraktion der Saponine aus der Probe umfasst.

3. Verfahren nach Anspruch 1 oder 2, **dadurch gekennzeichnet, dass** die in Schritt (1) verwendete Probe in einem Lösungsmittel, ausgewählt aus der Gruppe bestehend aus Wasser, C1-C4-Alkoholen und deren Mischungen, vorzugsweise Methanol oder Ethanol und noch bevorzugter Methanol, gelöst wird.

4. Verfahren nach einem der Ansprüche 1 bis 3, **dadurch gekennzeichnet, dass** die in Schritt (1) zugesetzte Menge an p-Anisaldehyd im Bereich von 0,1-10%, vorzugsweise von 2-5% liegt, besonders bevorzugt 3% beträgt, bezogen auf das Gesamtvolumen der Reaktionsmischung.

5. Verfahren nach einem der vorstehenden Ansprüche, **dadurch gekennzeichnet, dass** die Erhitzungszeit für das Reaktionsgemisch im Bereich von 1 Minute bis 60 Minuten, vorzugsweise von 10 Minuten bis 30 Minuten liegt, am meisten bevorzugt 20 Minuten beträgt.

6. Verfahren nach einem der vorstehenden Ansprüche, **dadurch gekennzeichnet, dass** die Probe mindestens einen Teil mindestens einer Saponinpflanze umfasst, vorzugsweise ausgewählt aus der Gruppe bestehend aus *Theaceae, Chenopodiaceae, Fabaceae, Agavaceae* und Mischungen davon und insbesondere *Camellia oleifera, Chenopodium quinoa, Trigonella foenum graecum, Yucca schidigera* und Mischungen davon.

7. Verfahren nach einem der vorstehenden Ansprüche, **dadurch gekennzeichnet, dass** die Probe mindestens einen Teil mindestens eines marinen Organismus umfasst, vorzugsweise ausgewählt aus der Gruppe der *Echinodermata* und *Porifera* und deren Mischungen, insbesondere Seegurken, Seesterne und Meeresschwämme und Mischungen davon.

8. Verfahren nach einem der vorstehenden Ansprüche, **dadurch gekennzeichnet, dass** die Saponine ausgewählt sind aus der Gruppe bestehend aus Triterpensaponinen, Steroidsaponinen und Mischungen davon.

9. Verfahren zur Bestimmung des Gesamtsaponingehalts einer Probe nach einem der vorhergehenden Ansprüche, **dadurch gekennzeichnet, dass** vor, nach oder gleichzeitig mit den Schritten (1) bis (5) ein Verfahren zur Bestimmung des Steroidsaponingehalts der Probe durchgeführt wird, wobei das Verfahren zur Bestimmung des Steroidsaponingehalts mindestens die Schritte in dieser Reihenfolge umfasst:

(i) Durchführung einer Reaktion durch Zugabe von p-Anisaldehyd und Schwefelsäure zu der in mindestens einem Lösungsmittel gelösten Probe, wobei die Schwefelsäure in einer Menge von 5-25%, vorzugsweise von 10-15%, am meisten bevorzugt in einer Menge von 12,5% vorliegt, bezogen auf das Gesamtvolumen der Reaktionsmischung;
(ii) Erhitzen der Reaktionsmischung auf eine Temperatur im Bereich von 45°C bis 80°C, vorzugsweise auf eine Temperatur von 60°C, um ein in Lösung vorliegendes Chromophor zu erhalten;
(iii) Messen der Absorption der Lösung des erhaltenen Chromophors bei einer Wellenlänge im Bereich von 400 nm bis 450 nm, vorzugsweise bei einer Wellenlänge von 425 nm;
(iv) Herstellung einer Reihe von Steroidsaponin-Standardlösungen unter den Reaktionsbedingungen der Schritte (i) und (ii), wobei die Absorptionswerte der Steroidsaponin-Standardlösungen nach der chromogenen Reaktion bei der in Schritt (iii) definierten Wellenlänge erhalten werden;
(v) Quantifizierung des Steroidsaponingehalts der Probe durch Vergleich der in Schritt (iii) gemessenen Absorption der Lösung des Chromophors mit dem Absorptionsbereich der in Schritt (iv) hergestellten Standardlösungen.

10. Verfahren zur Bestimmung des Gesamtsaponingehalts nach Anspruch 9, **dadurch gekennzeichnet, dass** die Probe aus Schritt (i) in einem Lösungsmittel, ausgewählt aus der Gruppe bestehend aus Wasser, C1-C4-Alkoholen und Mischungen davon, vorzugsweise Ethanol oder Methanol und noch bevorzugter Ethanol, gelöst wird.

11. Verfahren zur Bestimmung des Gesamtsaponingehalts nach Anspruch 9 oder 10, **dadurch gekennzeichnet, dass** die Menge an p-Anisaldehyd in Schritt (i) im Bereich von 0,1-2% liegt, vorzugsweise 0,5% beträgt, bezogen auf das Gesamtvolumen der Reaktionsmischung.

12. Verfahren zur Bestimmung des Gesamtsaponingehalts nach einem der Ansprüche 9 bis 11, **dadurch gekennzeichnet, dass** die Erhitzungszeit für das Reaktionsgemisch gemäß Schritt (ii) im Bereich von 1 Minute bis 60 Minuten, vorzugsweise von 10 Minuten bis 30 Minuten liegt, am meisten bevorzugt 20 Minuten beträgt.

13. Verfahren zur Bestimmung des Gesamtsaponingehalts nach einem der vorstehenden Ansprüche, **dadurch gekennzeichnet, dass** vor Schritt (1) und, falls vorhanden, vor Schritt (i) ein Vorschritt durchgeführt wird, der mindestens eine Extraktion von Saponinen aus der Probe umfasst, wobei die mindestens eine Extraktion von Saponinen aus der Probe vorzugsweise aus der Gruppe ausgewählt wird, die aus Druckextraktionen, Mazerationsextraktionen, Mikrowellenextraktionen, Ultraschallextraktionen und Rückflussextraktionen besteht, wobei der Vorschritt vorzugsweise eine Ultraschallextraktion von Saponinen aus der Probe ist.

14. Verfahren nach dem vorstehenden Anspruch, **dadurch gekennzeichnet, dass** die mindestens eine Extraktion in Gegenwart eines Lösungsmittels durchgeführt wird, ausgewählt aus der Gruppe bestehend aus wässrigen Lösungsmitteln, ionischen Lösungsmitteln, organischen Lösungsmitteln und Mischungen davon, vorzugsweise aus der Gruppe bestehend aus Wasser, Methanol, Ethanol, Acetonitril, Ethylacetat und Mischungen davon, vorzugsweise in Gegenwart Methanol durchgeführt wird.

15. Verfahren zur Bestimmung des Gesamtsaponingehalts einer Probe nach einem der Ansprüche 9 bis 14, **dadurch gekennzeichnet, dass** die Probe Steroid-Saponine und Triterpensaponine umfasst und dass der Triterpensaponingehalt der Probe durch die Differenz zwischen dem am Ende von Schritt (5) bestimmten Gesamtsaponingehalt der Probe und dem am Ende von Schritt (v) bestimmten Steroidsaponingehalt bestimmt wird.

## Claims

1. A method for determining the total saponin content of a sample, the method comprising at least the following steps, in this order:

(1) carrying out a reaction by adding p-anisaldehyde and sulfuric acid to said sample, which is solubilized in at least one solvent, the sulfuric acid being present in an amount ranging from 40% to 50%, most preferably an amount equal to 45%, by volume relative to the total volume of the reaction mixture;

(2) heating the reaction mixture to a temperature ranging from 45°C to 75°C, preferably ranging from 55°C to 65°C, most preferably a temperature equal to 60°C, to obtain a chromophore in solution;

(3) measuring the absorbance of the solution of the obtained chromophore at a wavelength ranging from 580 nm to 610 nm, preferably from 590 nm to 605 nm, most preferably a wavelength equal to 600 nm;

(4) producing a range of standard saponin solutions under the reaction conditions of steps (1) and (2), i.e., using the same solvent, using the same amounts of p-anisaldehyde and sulfuric acid, at the same temperature and using the same heating durations on the basis of solutions of a saponin standard in different concentrations, the absorbances of which standard saponin solutions after chromogenic reaction are obtained at the wavelength defined in step (3);

(5) quantifying the saponin content of the sample by comparing the absorbance of the solution of the chromophore measured in step (3) with the range of absorbances of the standard solutions produced in step (4).

2. The method according to claim 1, **characterized in that** it does not comprise a step of solid-phase extraction or a step of liquid-liquid extraction of the saponins from the sample.

3. The method according to either claim 1 or claim 2, **characterized in that** the sample used in step (1) is solubilized in a solvent selected from the group consisting of water, $C_1$-$C_4$ alcohols and mixtures thereof, preferably methanol or ethanol and more preferably methanol.

4. The method according to any of claims 1 to 3, **characterized in that** the amount of p-anisaldehyde added in step (1) ranges from 0.1% to 10%, preferably from 2% to 5%, most preferably is 3%, by volume relative to the total volume of the reaction mixture.

5. The method according to any of the preceding claims, **characterized in that** the heating time for the reaction mixture ranges from 1 minute to 60 minutes, preferably from 10 minutes to 30 minutes, most preferably is 20 minutes.

6. The method according to any of the preceding claims, **characterized in that** the sample comprises at least a portion of at least one saponin plant, preferably selected from the group consisting of *Theaceae, Chenopodiaceae, Fabaceae, Agavaceae* and mixtures thereof and in particular *Camellia oleifera, Chenopodium quinoa, Trigonella foenum graecum, Yucca schidigera* and mixtures thereof.

7. The method according to any of the preceding claims, **characterized in that** the sample comprises at least a portion of at least one marine organism, preferably selected from the group formed by *Echinodermata* and *Porifera* and mixtures thereof, in particular sea cucumbers, starfish and sea sponges and mixtures thereof.

8. The method according to any of the preceding claims, **characterized in that** the saponins are selected from the group consisting of triterpene saponins, steroid saponins and mixtures thereof.

9. The method for determining the total saponin content of a sample according to any of the preceding claims, **characterized in that** a method for determining the steroid saponin content of said sample is implemented before, after or at the same time as steps (1) to (5), said method for determining the steroid saponin content comprising at least the following steps, in this order:

(i) carrying out a reaction by adding p-anisaldehyde and sulfuric acid to said sample, which is solubilized in at least one solvent, the sulfuric acid being present in an amount ranging from 5% to 25%, preferably from 10% to 15%, most preferably an amount equal to 12.5%, by volume relative to the total volume of the reaction mixture;

(ii) heating the reaction mixture to a temperature ranging from 45°C to 80°C, preferably a temperature equal to 60°C, to obtain a chromophore in solution;

(iii) measuring the absorbance of the solution of the obtained chromophore at a wavelength ranging from 400 nm to 450 nm, preferably a wavelength of 425 nm;

(iv) producing a range of standard steroid saponin solutions under the reaction conditions of steps (i) and (ii), the absorbances of which standard steroid saponin solutions after chromogenic reaction are obtained at the wavelength defined in step (iii);

(v) quantifying the steroid saponin content of the sample by comparing the absorbance of the solution of the chromophore measured in step (iii) with the range of absorbances of the standard solutions produced in step (iv).

**10.** The method for determining the total saponin content according to claim 9, **characterized in that** the sample from step (i) is solubilized in a solvent selected from the group consisting of water, $C_1$-$C_4$ alcohols and mixtures thereof, preferably ethanol or methanol and more preferably ethanol.

**11.** The method for determining the total saponin content according to either claim 9 or claim 10, **characterized in that** the amount of p-anisaldehyde in step (i) ranges from 0.1% to 2%, preferably is 0.5%, by volume relative to the total volume of the reaction mixture.

**12.** The method for determining the total saponin content according to any of claims 9 to 11, **characterized in that** the heating time for the reaction mixture according to step (ii) ranges from 1 minute to 60 minutes, preferably from 10 minutes to 30 minutes, most preferably is 20 minutes.

**13.** The method for determining the total saponin content according to any of the preceding claims, **characterized in that** a preliminary step comprising at least one extraction of saponins from the sample is carried out before step (1) and, if present, before step (i), said at least one extraction of saponins from the sample being preferably selected from the group consisting of pressure extractions, maceration extractions, microwave extractions, ultrasonic extractions and reflux extractions, said preliminary step preferably being an ultrasonic extraction of saponins from the sample.

**14.** The method according to the preceding claim, **characterized in that** said at least one extraction is carried out in the presence of a solvent selected from the group consisting of aqueous solvents, ionic solvents, organic solvents and mixtures thereof, preferably from the group consisting of water, methanol, ethanol, acetonitrile, ethyl acetate and mixtures thereof, preferably methanol.

**15.** The method for determining the total saponin content of a sample according to any of claims 9 to 14, **characterized in that** said sample comprises steroid saponins and triterpene saponins, and **in that** the triterpene saponin content of said sample is determined by the difference between the total saponin content of said sample determined at the end of step (5) and the steroid saponin content determined at the end of step (v).

## Droite de calibration escin IB 600 nm

**Figure 1**

## Droite de calibration protodioscine 600 nm

**Figure 2**

## Droite de calibration protodioscine 425 nm

**Figure 3**

**Figure 4**

**Figure 5**

**Figure 6**

**Figure 7**

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CN 106404685 A
- CN 106596426 A
- CN 106483084 A

- JP S60219556 A
- CN 109765308 A

### Littérature non-brevet citée dans la description

- Effect of the extraction method on phytochemical composition and antioxydant activity of high dietary fibre powders obtained from asparagus by-products. **DE FUENTES-ALVENTOSA et al.** FOOD CHEMISTRY. ELSEVIER LTD, vol. 116, 484-490
- **ATTELE A. S. ; WU J. A. ; YUAN C. S.** Ginseng pharmacology: multiple constituents and multiple actions. *Biochem. Pharmacol.,* 1999, vol. 58 (11), 1685-1693
- **BACCOU J. C. ; LAMBERT F. ; SAUVAIRE Y.** Spectrophotometric method for the détermination of total steroidal sapogenin. *The Analyst.,* 1977, vol. 102 (1215), 458
- **BUDAN A. ; TESSIER N. ; SAUNIER M. ; GILLMANN L. ; HAMELIN J. ; CHICOTEAU P. ; RICHOMME P. ; GUILET D.** Effect of several saponin containing plant extracts on rumen fermentation in vitro, Tetrahymena pyriformis and sheep erythrocytes. *J. Food Agric. Environ.,* 2013, vol. 11 (2), 576-582
- **GRENBY T. H.** Intense sweeteners for the food industry: an overview. *Trends Food Sci. Technol.,* 1991, vol. 2, 2-6
- **Ö., MAZZA G.** Saponins: Properties, Applications and Processing. *Crit. Rev. Food Sci. Nutr,* 2007, vol. 47 (3), 231-258
- **HENG L. ; VINCKEN J.-P. ; VAN KONINGSVELD G. ; LEGGER A. ; GRUPPEN H. ; VAN BOEKEL T. ; ROOZEN J. ; VORAGEN F.** Bitterness of saponins and their content in dry peas. *J. Sci. Food Agric.,* 2006, vol. 86 (8), 1225-1231

- **HIAI S. ; OURA H. ; ODAKA Y. ; NAKAJIMA T.** A colorimetric estimation of ginseng saponins. *Planta Med.,* 1975, vol. 28 (08), 363-369
- **KITAGAWA I.** Licorice root. A natural sweetener and an important ingrédient in Chinese medicine. *Pure Appl. Chem.,* 2002, vol. 74 (7), 1189-1198
- **MARTÍN R. S. ; BRIONES R.** Industrial uses and sustainable supply of Quillaja saponaria (Rosaceae) saponins. *Econ. Bot.,* 1999, vol. 53 (3), 302-311
- **NAKAJIMA H. ; OURA. T.** *Color reaction of somme sapogenins and saponins with vanillin and sulfuric acid,* 1976, vol. 29, 7
- **ODA K. ; MATSUDA H. ; MURAKAMI T. ; KATAYAMA S. ; OHGITANI T. ; YOSHIKAWA M.** Adjuvant and Haemolytic Activities of 47 Saponins Derived from Médicinal and Food Plants. *Biol. Chem.,* 2005, vol. 381 (1), 67-74
- **ROSS J. ; MILES G. D.** An apparatus for comparison of foaming properties of soaps and detergents. *Oil Soap.,* 1941, vol. 18 (5), 99-102
- **SPARG S. G. ; LIGHT M. E. ; VAN STADEN J.** Biological activities and distribution of plant saponins. *J. Ethnopharmacol.,* 2004, vol. 94 (2-3), 219-243
- **TENON M. ; FEUILLÈRE N. ; ROLLER M. ; BIRTIC S.** Rapid, cost-effective and accurate quantification of Yucca schidigera Roezl. steroidal saponins using HPLC-ELSD method. *Food Chem.,* 2017, vol. 221, 1245-1252
- **VINCKEN J.-P. ; HENG L. ; DE GROOT A. ; GRUPPEN H.** Saponins, classification and occurrence in the plant kingdom. *Phytochemistry,* 2007, vol. 68 (3), 275-297